(19) Europäisches Patentamt
European Patent Office
Office européen des brevets

(11) **EP 2 463 175 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(51) Int Cl.:
*B61L 23/04* (2006.01)   *G01B 11/24* (2006.01)
*G01N 21/89* (2006.01)   *G01N 21/95* (2006.01)

(21) Anmeldenummer: **11450150.5**

(22) Anmeldetag: **06.12.2011**

(54) **Verfahren zum Auffinden von Oberflächenfehlern**

Method for locating surface defects

Procédé de détection de défauts de surface

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2010 AT 20562010**

(43) Veröffentlichungstag der Anmeldung:
**13.06.2012 Patentblatt 2012/24**

(73) Patentinhaber: **AIT Austrian Institute of Technology GmbH**
**1220 Wien (AT)**

(72) Erfinder:
• **Huber-Mörk, Reinhold**
**1220 Wien (AT)**
• **Mayer, Konrad**
**1230 Wien (AT)**

(74) Vertreter: **Wildhack & Jellinek**
**Patentanwälte**
**Landstraßer Hauptstraße 50**
**1030 Wien (AT)**

(56) Entgegenhaltungen:
EP-A1- 1 236 634      EP-A1- 1 970 279
WO-A2-2006/004846     US-A- 4 915 504

• **LEWIS R B: "TRACK-RECORDING TECHNIQUES USED ON BRITISH RAIL", PROCEEDINGS OF THE INSTITUTION OF ELECTRICAL ENGINEERS, INSTITUTION OF ELECTRICAL ENGINEERS. STEVENAGE, GB, Bd. 131, Nr. 3, PART B, 1. Mai 1984 (1984-05-01), Seiten 73-81, XP001389270, ISSN: 0020-3270**
• **ZACHER, M.; BAUMANN, G.; LE, R.: "Modelle zur Prognose von Rollkontaktermüdungsschäden an Schienen", EI - DER EISENBAHNINGENIEUR, Bd. 60, Nr. 7, 2009, Seiten 44-52, XP009160681,**

**Beschreibung**

Die Erfindung betrifft ein Verfahren zur Inspektion der Oberfläche von länglichen Gegenständen mit im wesentlichen konstantem Querschnitt und glatter Oberfläche gemäß dem Oberbegriff des Patentanspruchs 1 sowie eine Vorrichtung gemäß dem Oberbegriff des Patentanspruchs 12. Ferner betrifft die Erfindung ein Verfahren gemäß Patentanspruch 24 sowie einen Datenträger gemäß Patentanspruch 28.

Die Erfindung wird insbesondere im Bereich der automatisierten Prüfung von Schienen angewendet. Die WO 2006/004846 A2 offenbart ein Verfahren zur Prüfung von Schienen dieser Art.

Unter einer Zeit oder einem Zeitpunkt ist im Zusammenhang mit der Erfindung jeweils ein bestimmter Aufnahmezeitpunkt zu verstehen, der mit einer ganzen Zahl angegeben wird. Die jeweilige ganze Zahl gibt eine Anzahl von Referenzintervallen an, die seit einem Referenzzeitpunkt vergangen sind. Typischerweise entspricht das Referenzzeitintervall einem zwischen zwei Aufnahmezeitpunkten liegenden Zeitraum.

Hintergrund der Erfindung ist die automatisierte Prüfung von Schienen. Zur Vermeidung von schweren Unfällen stellt eine regelmäßige und hinreichende Überprüfung der Schienen eine notwendige Vorsichtsmaßnahme dar. Ursprünglich wurde die Inspektion von Schienen durch Sichtkontrolle wahrgenommen, wobei gegebenenfalls der optische Eindruck mit manueller mechanischer Prüfung, etwa mittels des Schlagens eines Hammers ergänzt wurde. Im Zuge der Automatisierung wurden Ultraschallsensoren und magnetische Sensoren sowie Röntgenstrahlungssensoren eingesetzt. Obwohl einige Probleme mittels visueller Prüfung nicht erkannt werden können, stellt diese dennoch eine wertvolle Maßnahme zur Verbesserung des Informationsstands über den Zustand der Schienen dar und kann vorteilhaft in Kombination mit den bewährten Methoden der Schienenprüfung eingesetzt werden. So stellt etwa auch die Analyse von Abnutzungserscheinungen an Schienen mittels automatisierter visueller Methoden des Schienenkopfes eine wirksame Maßnahme zur Erkennung fehlerhafter Schienen dar.

Es sind aus dem Stand der Technik eine Vielzahl von Verfahren bekannt, um die Qualität bzw. den Betriebszustand von Schienen automatisiert zu bestimmen. Insbesondere sind Verfahren bekannt, mittels derer die Schienen mit einer Kamera abgetastet werden, wobei aus den aufgenommenen Kamerabildern schwerwiegende Fehler der aufgenommenen Schienen abgeleitet werden können. Aus der Literatur sind bisher nur Methoden bekannt, die Schienenbilder mit einer Auflösung im Bereich von 1 mm analysieren, was für charakteristische Frühschäden von Schienenschädigung nicht ausreichend ist.

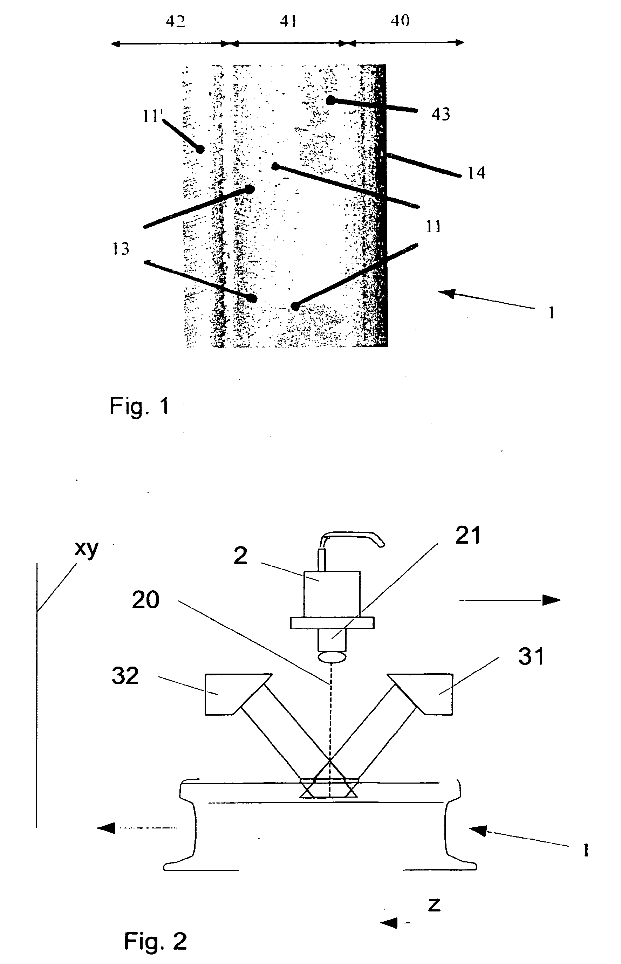

Fig. 1 zeigt das Bild einer fehlerhaften Schiene mit einer Anzahl von unterschiedlichen Fehlern in Draufsicht. Materialfehler wie Ausbrüche 11 oder sogenannte Headchecks 14 sind die Folge von kleinen Materialausbrüchen 11 in der Schiene 1. Diese Materialfehler können an unterschiedlichen Bereichen der Schiene 1 auftreten, so treten Ausbrüche 11 typischerweise im Mittelbereich oder Fahrspiegel 41 der Schiene auf, während Headchecks 14 typischerweise an der Fahrkante 40 auftreten. Ausbrüche 11 und Headchecks 14 sind typische Anzeichen für Defekte in der Schiene 1 und sind Indikatoren für Schienenbruch. Vorstufen zu Ausbrüchen 11 oder Headchecks 14 sind Mikrorisse 13, die durch plastisches Fließen und Abrieb, eine Folge der sogenannten Rollkontaktermüdung (Zacher, M., Baumann, G., Le, R.: Modelle zur Prognose von Rollkontaktermüdungsschäden an Schienen. EI - Der Eisenbahningenieur 60(7), 44-52 (2009)), von der Schiene 1 entstehen. Mikrorisse 13 können bereits bei einer Auflösung von weniger als 0,25 mm detektiert werden. Schleifzonen 11', die durch das Abschleifen der Schienen 1 zur Verbesserung der Haltbarkeit erstellt werden, werden im Zuge des Betriebs an denjenigen Stellen beseitigt, die von den Rädern des Zugs befahren werden und bleiben somit weitestgehend an denjenigen Stellen erhalten, die nicht von den Rädern des Zugs befahren werden, also den Außenkanten 42 der Schiene 1.

Somit ist es Aufgabe der Erfindung, die Erkennung von Oberflächenfehlern, insbesondere von Ausbrüchen 11, Headchecks 14 und Mikrorissen 13 zu verbessern und ein einfaches Erkennungsverfahren hierfür bereitzustellen.

Die Erfindung ist anhand der Erkennung von Fehlern an der Oberfläche von Schienen dargestellt, sie ist jedoch nicht auf Schienen beschränkt, sondern kann ganz allgemein für die Fehlererkennung an der Oberfläche von beliebigen Gegenständen mit reflektierender Oberfläche verwendet werden.

Die Erfindung löst diese Aufgabe bei einem Verfahren gemäß dem Oberbegriff des Patentanspruchs 1 mit den Merkmalen des Kennzeichens des Patentanspruchs 1. Die Erfindung löst diese Aufgabe bei einer Vorrichtung gemäß dem Oberbegriff des Patentanspruchs 7 mit den Merkmalen des Kennzeichens des Patentanspruchs 7.

Erfindungsgemäß ist bei einem Verfahren zum Auffinden von Oberflächenfehlern, wie etwa Kanten von Ausbrüchen, Brüchen, Mikrorissen oder Schleifzonen, auf der Oberfläche von länglichen Gegenständen, wie etwa Schienen oder Metallprofilen, wobei dem zu inspizierenden Gegenstand eine Längserstreckungsrichtung zugeordnet ist,

a) mit einem Zeilensensor, dessen Aufnahmebereich in einer vorgegebenen Ebene liegt, die normal zur Längserstreckungsrichtung des Gegenstands ausgerichtet ist, wobei sich der jeweilige zu inspizierende Gegenstand im Aufnahmebereich des Zeilensensors befindet, sowie

b) mit zumindest zwei gegenüber dem Zeilensensor lagefest angeordneten Lichtquellen, wobei die erste Lichtquelle in Längserstreckungsrichtung vor dem Zeilensensor angeordnet ist und die zweite Lichtquelle hinter dem Zeilensensor angeordnet ist und das jeweilige Licht beider Lichtquellen in dem Bereich des Gegenstands einstrahlt, der im Aufnahmebereich des Zeilensensors liegt,

c) wobei der Zeilensensor jeweils eine Anzahl von Pixelsensoren zur separaten Erkennung des Lichts einer der beiden Lichtquellen aufweist, wobei jeder der Pixelsensoren separat die Lichtintensität des von jeder der beiden Lichtquellen abgegebenen und auf ihn reflektierten Lichts misst,

d) wobei jeder Pixelsensor jeweils eine erste Lichtintensität ermittelt, die dem von der ersten Lichtquelle abgegebenen und auf ihn refletktierten Lichtes entspricht, und eine zweite Lichtintensität ermittelt, die dem von der zweiten Lichtquelle abgegebenen und auf ihn refletktierten Lichtes entspricht

e) wobei der Zeilensensor und die Lichtquellen zueinander lagefest sind und in Längserstreckungsrichtung des zu inspizierenden Gegenstands eine Relativbewegung zum Gegenstand vollführen,

f) wobei mit dem Zeilensensor eine Anzahl von Zeilenbildern ermittelt wird, und entsprechend ihrer Aufnahmereihenfolge abgespeichert werden, vorgesehen, dass für zumindest einen Pixelsensor und zumindest einen Zeitpunkt

g) jeweils ein erster Mittelwert und ein zweiter Mittelwert für die erste Lichtintensität und die zweite Lichtintensität ermittelt wird,

h) dass für einen vorgegebenen Wert die folgenden Kriterien überprüft werden

$$T_{1d} : r_{t+d} / r_{t,M} < 1/t_r$$

$$T_{2d} : r_{t-d} / r_{t,M} > t_r$$

$$T_{3d} : b_{t-d} / b_{t,M} < 1/t_b$$

$$T_{4d} : b_{t+d} / b_{t,M} > t_b,$$

wobei $t_r$ und $t_b$ zwei vorgegebene Schwellenwerte sind, und

i) eine Kante eines Ausbruchs oder ein Fehler der Oberfläche dann als vorhanden detektiert wird, wenn zumindest eine bestimmte Anzahl der Kriterien erfüllt ist.

Bei einer Vorrichtung zum Auffinden von Kanten von Ausbrüchen auf der Oberfläche von länglichen Gegenständen, wobei dem zu inspizierenden Gegenstand eine Längserstreckungsrichtung zugeordnet ist,

a) umfassend einen Zeilensensor, dessen Aufnahmebereich in einer vorgegebenen Ebene liegt, die normal zur Längserstreckungsrichtung des Gegenstands ausgerichtet ist und wobei sich der jeweilige zu inspizierende Gegenstand im Aufnahmebereich des Zeilensensors befindet, sowie

b) zumindest zwei gegenüber dem Zeilensensor lagefest angeordnete Lichtquellen, nämlich eine erste Lichtquelle und eine zweite Lichtquelle, wobei die erste Lichtquelle in Längserstreckungsrichtung vor dem Zeilensensor angeordnet ist und die zweite Lichtquelle hinter dem Zeilensensor angeordnet ist und das jeweilige Licht beider Lichtquellen in dem Bereich des Gegenstands einstrahlt, der im Aufnahmebereich des Zeilensensors liegt,

c) wobei der Zeilensensor jeweils eine Anzahl von Pixelsensoren zur separaten Erkennung des von den beiden Lichtquellen abgegebenen Lichts sowie zur Bestimmung der jeweiligen Lichtintensität aufweist,

d) umfassend eine Fortbewegungseinheit zur Relativbewegung des Zeilensensors und der Lichtquellen in Längserstreckungsrichtung relativ zu dem zu inspizierenden Gegenstand

e) eine Aufnahmeeinheit, die an den Zeilensensor angeschlossen ist und die vom Zeilensensor aufgenommenen Bilder entsprechend ihrer Aufnahmereihenfolge abspeichert, ist erfindungsgemäß vorgesehen, dass

f) eine Mittelwertbildungseinheit vorgesehen ist, die für zumindest einen Pixelsensor und zumindest einen Zeitpunkt jeweils einen Mittelwert für die aufgenommenen Lichtintensitätswerte ermittelt,

g) dass für den Pixelsensor eine Detektoreinheit vorgesehen ist, die für die aufgenommenen Lichtintensitätswerte zu zumindest einem Zeitpunkt jeweils für einen vorgegebenen Wert die folgenden Kriterien überprüft

$$T_{1d} : r_{t+d} / r_{t, M} < 1/t_r \qquad T_{2d} : r_{t-d} / r_{t, M} > t_r \qquad T_{3d} : b_{t-d} / b_{t, M} < 1/t_b \qquad T_{4d} : b_{t+d} / b_{t, M} > t_b,$$

wobei $t_r$ und $t_b$ zwei vorgegebene Schwellenwerte sind, und

h) umfassend eine der Detektoreinheit nachgeschaltete Kantenerkennungseinheit, die eine Kante eines Ausbruchs dann als vorhanden detektiert, wenn zumindest eine bestimmte Anzahl der Kriterien erfüllt ist.

Vorteilhafte Ausgestaltungen des erfindungsgemäßen Verfahrens sind in den Unteransprüchen dargestellt.

So kann vorgesehen sein, dass die beiden Lichtquellen Licht unterschiedlicher Wellenlängen abgeben und jeder der Pixelsensoren separat die Lichtintensität bei jeder der beiden Wellenlängen bestimmt. Hierdurch kann das Licht von der ersten Lichtquelle effizient vom Licht der zweiten Lichtquelle unterschieden werden und eine einfache Detektion von Kanten erreicht werden.

Alternativ oder zusätzlich kann vorgesehen sein, dass eine der beiden Lichtwellenlängen im Bereich des roten Lichts und die jeweils andere Lichtwellenlänge im Bereich des blauen Lichts gewählt wird. Dies ermöglicht eine gute optische Unterscheidung der beiden Lichtquellen sowie eine einfache optische Kontrolle des Verfahrens.

Es kann auch zudem vorgesehen sein, dass jeder der Pixelsensoren jeweils einen ersten und einen zweiten Teilsensor umfasst, wobei der erste Teilsensor Licht der ersten Wellenlänge misst und der zweite Teilsensor Licht der zweiten Wellenlänge misst. Dies ermöglicht eine besonders einfache Bestimmung der einzelnen Lichtintensitätswerte.

Alternativ kann vorgesehen sein, dass die beiden Lichtquellen zu unterschiedlichen, voneinander getrennten, wiederkehrenden Zeitintervallen Licht abgeben, wobei während des ersten Zeitintervalls die erste Lichtquelle aktiviert wird und die erste Lichtintensität dem vom jeweiligen Pixelsensor erfassten Intensitätswert gleichgesetzt wird und während des zweiten Zeitintervalls die zweite Lichtintensität dem vom jeweiligen Pixelsensor erfassten Intensitätswert gleichgesetzt wird. Dies ermöglicht die Durchführung des Verfahrens mit gleich ausgebildeten Lichtquellen.

Ein weiterer bevorzugter Aspekt der Erfindung sieht vor, dass die Relativposition und die Relativausrichtung des Zeilensensors und der Lichtquellen anhand eines als fehlerfrei detektierten Referenzgegenstands derart ausgerichtet werden, dass das mit dem Zeilensensor aufgenommene Bild frei von unmittelbaren Reflexionen des von den Lichtquellen ausgesandten Lichts ist. Dies ermöglicht eine störungsfreie Aufnahme und eine verbesserte Kantendetektion.

Es kann auch vorgesehen sein, dass eine Kante oder ein Fehler der Oberfläche dann als vorhanden detektiert wird, wenn alle vier Kriterien erfüllt sind. Dies ermöglicht eine besonders sichere Detektion von Fehlern an der Oberfläche.

Zur Verbesserung der Erkennungsgenauigkeit kann weiters vorgesehen sein, dass der erste Mittelwert und/ oder der zweite Mittelwert durch Bildung eines gleitenden Mittelwerts ermittelt wird, insbesondere mittels eines Gauss-Filters, der vorzugsweise eine Anzahl von vorangehenden und nachfolgenden Intensitätswerten gewichtet summiert.

Zur Anpassung des erfindungsgemäßen Verfahrens an unterschiedliche Fortbewegungsgeschwindigkeiten des Schienenfahrzeugs, Aufnahmeintervalle des Zeilensensors sowie Rissbreiten kann vorgesehen sein, dass der vorgegebene Wert d durch die Anzahl durch Anpassung an die typischerweise auftretende Rissbreite festgelegt wird, wobei größere Rissbreiten zu einer Erhöhung des vorgegebenen Werts führen, wobei der vorgegebene Wert d insbesondere auf 1 oder 2 festgelegt wird.

Zur Anpassung des erfindungsgemäßen Verfahrens an unterschiedliche Lichtverhältnisse wie seitliche Lichteinstrahlungen, unterschiedliche Sensitivitäten der Pixelsensoren des Zeilensensors und unterschiedliche Lichtleistungen der Lichtquellen kann vorgesehen sein, dass die beiden Schwellenwerte durch Kalibrierung bzw. Optimierung ermittelt werden, wobei gegebenenfalls in einem Kalibrierungsschritt eine Anzahl von Zeilenbildern mit bekannten Fehlern inspiziert werden und die Anzahl der als fehlerhaft bezeichneten unversehrten Stellen sowie die Anzahl der nicht detektierten Fehler minimiert wird, und wobei insbesondere die Schwellenwerte jeweils auf einen Wert zwischen 1,1 und 1,3 festgelegt werden.

EP 2 463 175 B1

Zur verbesserten Brucherkennung kann vorgesehen sein, dass ein Bruch dann als detektiert angesehen wird, wenn innerhalb eines vorgegebenen Aufnahmezeitraums, vorzugsweise von zwischen 10 und 50 Zeilenbildern, in zumindest 60%, insbesondere in zumindest 80%, der Pixelsensoren jeweils zumindest eine Kante detektiert worden ist.

Im folgenden werden vorteilhafte Weiterbildungen der erfindungsgemäßen Vorrichtung dargestellt.

Vorteilhafterweise kann vorgesehen sein, dass die beiden Lichtquellen Licht unterschiedlicher Wellenlängen abgeben, und jeder der Pixelsensoren separat die Lichtintensität bei jeder der beiden Wellenlängen bestimmt. Hierdurch kann das Licht von der ersten Lichtquelle effizient vom Licht der zweiten Lichtquelle unterschieden werden und eine einfache Detektion von Kanten erreicht werden.

Alternativ oder zusätzlich kann vorgesehen sein, dass eine der beiden Lichtwellenlängen im Bereich des roten Lichts und die jeweils andere Lichtwellenlänge im Bereich des blauen Lichts gewählt wird. Dies ermöglicht eine gute optische Unterscheidung der beiden Lichtquellen sowie eine einfache optische Kontrolle des Verfahrens.

Es kann auch zudem vorgesehen sein, dass jeder der Pixelsensoren jeweils einen ersten und einen zweiten Teilsensor umfasst, wobei der erste Teilsensor Licht der ersten Wellenlänge misst und der zweite Teilsensor Licht der zweiten Wellenlänge misst. Dies ermöglicht eine besonders einfache Bestimmung der einzelnen Lichtintensitätswerte.

Alternativ kann vorgesehen sein, dass eine Umschalteinheit vorgesehen ist, die die beiden Lichtquellen ansteuert, sodass die beiden Lichtquellen zu unterschiedlichen, voneinander getrennten, wiederkehrenden Zeitintervallen Licht abgeben,

wobei die Umschalteinheit während des ersten Zeitintervalls die erste Lichtquelle aktiviert, wobei die zweite Lichtquelle deaktiviert und die erste Lichtintensität dem vom jeweiligen Pixelsensor erfassten Intensitätswert gleichgesetzt wird und

wobei die Umschalteinheit während des zweiten Zeitintervalls die zweite Lichtquelle aktiviert, wobei die erste Lichtquelle deaktiviert und die zweite Lichtintensität dem vom jeweiligen Pixelsensor erfassten Intensitätswert gleichgesetzt wird. Dies ermöglicht die Durchführung des Verfahrens mit gleich ausgebildeten Lichtquellen.

Ein weiterer bevorzugter Aspekt der Erfindung sieht vor, dass die Relativposition und die Relativausrichtung des Zeilensensors und der Lichtquellen anhand eines als fehlerfrei detektierten Referenzgegenstands derart ausgerichtet sind, dass das mit dem Zeilensensor aufgenommene Bild frei von unmittelbaren Reflexionen des von der Lichtquelle ausgesandten Lichts ist. Dies ermöglicht eine störungsfreie Aufnahme und eine verbesserte Kantendetektion.

Es kann auch vorgesehen sein, dass die Detektoreinheit eine Kante dann als vorhanden detektiert, wenn alle vier Kriterien erfüllt sind. Dies ermöglicht eine besonders sichere Detektion von Fehlern an der Oberfläche.

Zur Verbesserung der Erkennungsgenauigkeit kann weiters vorgesehen sein, dass die Mittelwertbildungseinheit den ersten Mittelwert und/oder den zweiten Mittelwert durch Bildung eines gleitenden Mittelwerts aus den jeweiligen Lichtintensitätswerten ermittelt, insbesondere mittels eines Gauss-Filters, der vorzugsweise eine Anzahl von vorangehenden und nachfolgenden Lichtintensitätswerten gewichtet summiert.

Zur Anpassung des erfindungsgemäßen Verfahrens an unterschiedliche Fortbewegungsgeschwindigkeiten des Schienenfahrzeugs, Aufnahmeintervalle des Zeilensensors sowie Rissbreiten kann vorgesehen sein, dass der vorgegebene Wert d durch Anpassung an die typischerweise auftretende Rissbreite festgelegt ist, wobei größere Rissbreiten zu einer Erhöhung des vorgegebenen Werts führen, und wobei der vorgegebene Wert insbesondere auf 1 oder 2 festgelegt wird.

Zur Anpassung des erfindungsgemäßen Verfahrens an unterschiedliche Lichtverhältnisse wie seitliche Lichteinstrahlungen, unterschiedliche Sensitivitäten der Pixelsensoren des Zeilensensors und unterschiedliche Lichtleistungen der Lichtquellen kann vorgesehen sein, dass die beiden Schwellenwerte jeweils auf einen Wert zwischen 1,1 und 1,3 festgelegt sind.

Zur verbesserten Brucherkennung kann eine Brucherkennungseinheit vorgesehen sein, die den einzelnen Detektoreinheiten nachgeschaltet ist, und die einen Bruch dann feststellt, wenn innerhalb eines vorgegebenen Aufnahmezeitraums, vorzugsweise von zwischen 10 und 50 Zeilenbildern, in zumindest 60%, insbesondere in zumindest 80%, der Pixelsensoren jeweils zumindest eine Kante detektieren.

Zur einfachen Erreichung einer Relativbewegung kann vorgesehen sein, dass die Fortbewegungseinheit durch ein Schienenfahrzeug ausgebildet ist, das den Zeilensensor und die beiden Lichtquellen trägt und gegebenenfalls auf dem Gegenstand, insbesondere der Schiene relativ bewegbar oder verfahrbar ist, und/oder

dass der Zeilensensor und die beiden Lichtquellen feststehend angeordnet sind die Fortbewegungseinheit zur Fortbewegung des Gegenstands relativ zum Zeilensensor und den beiden Lichtquellen ausgebildet ist.

Im folgenden werden vorteilhafte Weiterbildungen des zweiten erfindungsgemäßen Verfahrens dargestellt.

Weiters kann vorgesehen sein, dass die a-priori Wahrscheinlichkeit als Wahrscheinlichkeit des Auftretens von Fehlern in einer Anzahl von vorab aufgenommenen Digitalbildern ermittelt wird, wobei die a-priori Wahrscheinlichkeit durch Mittelung der dem Klassifikationsverfahren entspringenden Wahrscheinlichkeitswerte errechnet wird. Dies ermöglicht eine besonders vorteilhafte Kalibrierung und verbessert die Erkennungsgenauigkeit.

Weiters kann vorgesehen sein, dass die Abhängigkeit der a-priori Wahrscheinlichkeit von der Lage des jeweiligen Pixels in Ausdehnungsrichtung vernachlässigt wird. Dies ermöglicht eine erhebliche Vereinfachung des Verfahrens und verringert den Ressourcenbedarf.

5

Zur bevorzugten Erkennung von Fehlern auf der Oberfläche von Schienen kann schließlich vorgesehen sein, dass als Fehlerklassen oder Fehlertypen auf Schienen Ausbrüche, Brüche oder Mikrorisse oder Schleifzonen und unversehrte Schienenoberflächen herangezogen werden.

Zwei konkrete Ausführungsbeispiele der Erfindung werden anhand der folgenden ohne Beschränkung des allgemeinen Erfindungsgedankens näher dargestellt.

Fig. 1 zeigt das Bild einer fehlerhaften Schiene mit einer Anzahl von unterschiedlichen Fehlern in Draufsicht. Fig. 2 zeigt schematisch eine erste Ausführungsform der Erfindung zur Durchführung des erfindungsgemäßen Verfahrens. Fig. 3 zeigt einen Profilschnitt in Ausdehnungsrichtung der Schiene mit einem Ausbruch sowie die Beleuchtung durch Lichtquellen. Die von einem der Sensorpixel des Zeilensensors während der Inspektionsfahrt aufgenommenen Intensitätswerte sind in Fig. 4 dargestellt. Fig. 5 zeigt ein Digitalbild und die Anwendung des erfindungsgemäßen Verfahrens zur Bestimmung der Fehlerwahrscheinlichkeit. Fig. 6 zeigt a-priori Wahrscheinlichkeiten für Klassen abhängig von der Pixelposition orthogonal zur Fahrtrichtung.

Fig. 2 zeigt schematisch eine erste Ausführungsform der Erfindung zur Durchführung des erfindungsgemäßen Verfahrens. Dargestellt sind eine Schiene 1, ein Zeilensensor 2 mit einer Anzahl von Einzelsensoren 21 sowie dessen Aufnahmebereich 20. Der Aufnahmebereich 20 umfasst die Schiene 1 und steht in einer Ebene xy im rechten Winkel zur Ausdehnungsrichtung z der Schiene 1. Der Zeilensensor 2 ist auf einem nicht dargestellten Schienenfahrzeug befestigt und wird von diesem im Zuge der Inspektion oder Prüfung der Schiene 1 getragen oder gezogen, während sich das Schienenfahrzeug auf der Schiene 1 bewegt. Die Schiene 1 wird von dem auf dem Schienenfahrzeug befestigten Zeilensensor 2 aufgenommen. Die Orientierung der Sensorzeile des Zeilensensors 21 ist dabei orthogonal zur Bewegungsrichtung des Schienenfahrzeugs und verläuft waagrecht.

In dieser bevorzugten Ausführungsform besteht der zu inspizierende Gleiskörper aus zwei Schienen 1, beim verwendeten Schienenfahrzeug werden zwei baugleiche erfindungsgemäße Vorrichtungen verwendet, die jeweils über einer der beiden Schienen 1 angeordnet sind. Mit beiden erfindungsgemäßen Vorrichtungen wird jeweils parallel das erfindungsgemäße Verfahren, wie im folgenden dargestellt, durchgeführt.

Alternativ ist es selbstverständlich auch möglich, lediglich eine Schiene 1 des Gleiskörpers zu inspizieren, wobei das Schienenfahrzeug dann lediglich mit einer erfindungsgemäßen Vorrichtung bestückt wird und das erfindungsgemäße Verfahren lediglich einmal durchgeführt wird.

Gemäß einer weiteren Alternative der Erfindung kann das Verfahren auch bei der Prüfung von Schienen 1 im Zuge der Fertigung eingesetzt werden, wobei in diesem konkreten alternativen Ausführungsbeispiel die Schiene 1 am Zeilensensor 2 vorbeibewegt wird, während der Zeilensensor 2 feststeht.

Die erfindungsgemäße Vorrichtung umfasst zwei Lichtquellen, nämlich eine erste Lichtquelle 31 und eine zweite Lichtquelle 32, die den vom Zeilensensor 2 erfassten Objektabschnitt der Schiene 1 mit Licht unterschiedlicher spektraler Charakteristik mit unterschiedlichen Wellenlängen I1, I2 beleuchten. Die Lichtquellen 31, 32 sind weiters so montiert, dass im Fall einer ungestörtern Oberfläche, d.h. bei einer neuwertigen oder unbeschädigten Schiene 1, das spiegelnd reflektierte Licht nicht auf den Zeilensensor 2 auftrifft. Lediglich ein Anteil von diffus reflektiertem Licht trifft unmittelbar auf den einzelnen Sensorpixeln 21 des Zeilensensors 2 auf. Untersuchungen zum Reflexionsverrhalten legen eine derartige Anordnung als vorteilhaft dar (Hoßfeld, M., Chu, W., Adameck, M., Eich, M.: Fast 3D-vision system to classify metallic coins by their embossed topography. Electronic Letters on Computer Vision and Image Analysis 5(4), 47-63 (2006))

Konkret ergibt sich dadurch die in Fig. 2 dargestellte Anordnung, wobei die erste Lichtquelle 31 in Fahrtrichtung bzw. in Ausdehnungsrichtung z der Schiene 1 gesehen vor dem Zeilensensor 2 angebracht ist und die zweite Lichtquelle 32 in Fahrtrichtung gesehen hinter dem Zeilensensor 2 montiert ist. Die erste Lichtquelle 31 gibt in diesem besonderen Ausführungsbeispiel der Erfindung Licht im roten Spektralbereich ab, die zweite Lichtquelle 32 gibt Licht im blauen Spektralbereich ab. Der Zeilensensor 2 umfasst Sensorpixel 21 zur Aufnahme von Licht mit unterschiedlichen Wellenlängen I1, I2. Jeder Pixelsensor 21 weist jeweils einen ersten Ausgang für die Lichtintensität von auf den Pixelsensor 21 eingestrahltem Licht mit der ersten Wellenlänge I1 sowie einen zweiten Ausgang für die Lichtintensität von auf den Pixelsensor 21 eingestrahltem Licht mit der zweiten Wellenlänge I2 auf. Die einzelnen von den einzelnen Ausgängen der Pixelsensoren 21 abgegebenen Werte werden einem ersten Kanal, der im Zusammenhang mit der Verwendung von rotem und blauen Licht als roter Kanal 9 bezeichnet wird, und einem zweiten Kanal, der im folgenden als blauer Kanal 10 bezeichnet wird, zugeführt.

Es ist selbstverständlich klar, dass es sich hierbei nur um eine exemplarische Ausführungsform handelt und sämtliche Lichtwellenlängen, die einfach voneinander unterschieden werden können, für die erfindungsgemäße Vermessung herangezogen werden können. Auch können Lichtwellenlängen I1, I2 bzw. Lichtfrequenzen herangezogen werden, die im Bereich des ultravioletten Lichts und/oder des Infrarotlichts liegen.

Dem roten Kanal 9 sind somit die in zeitlichen Abständen aufgenommenen Intensitätswerte des Pixelsensors 21 zugeführt, die von Reflexionen des von der ersten (roten) Lichtquelle 31 abgegebenen Lichts herrühren. Dementsprechend sind dem blauen Kanal 10 die in zeitlichen Abständen aufgenommenen Intensitätswerte des Pixelsensors 21 zugeführt, die von Reflexionen des von der zweiten (blauen) Lichtquelle 31 abgegebenen Lichts herrühren.

Die jeweiligen Intensitätswerte des roten Kanals 9 zu einem vorgegebenen Zeitpunkt t sind mit $r_t$ bezeichnet. Die jeweiligen Intensitätswerte des roten Kanals 9 zum Zeitpunkt 1 werden mit $r_1$ bezeichnet, die entsprechenden Intensitätswerte des blauen Kanals 10 zu einem vorgegebenen Zeitpunkt t werden analog mit $b_t$ bzw. zum Zeitpunkt t=1 mit $b_1$ bezeichnet.

Alternativ können auch anstelle eines einzigen Pixelsensors 21, der zu jedem Zeitpunkt t zwei Intensitätswerte $r_t$, $b_t$ bei zwei Lichtwellenlängen l1, l2 bestimmt, auch zwei separate Sub-Pixelsensoren herangezogen werden, von denen jeweils einer die Intensität bei einer der beiden Lichtwellenlängen l1, l2 bestimmt, wobei die beiden Sub-Pixelsensoren jeweils denselben Aufnahmebereich haben.

Letztlich ist es ausreichend, wenn für jeden der einzelnen Teilbereiche des Aufnahmebereichs des Zeilensensors 2 jeweils zwei Intensitätswerte $r_t$, $b_t$ für zwei unterschiedliche Wellenlängenbereiche l1, l2 zur Verfügung stehen, da somit die Reflexionsbilder des von der ersten Lichtquelle 31 abgegebenen Lichts von den Reflexionsbildern des von der zweiten Lichtquelle 32 abgegebenen Lichts unterschieden werden können.

Selbstverständlich ist es auch möglich, die beiden Lichtquellen 31, 32 zu vertauschen, es ist völlig unerheblich, ob die erste Lichtquelle 31 oder die zweite Lichtquelle 32 in Fahrtrichtung bzw. in Ausdehnungsrichtung z der Schiene 1 vor oder hinter dem Zeilensensor 2 angeordnet ist bzw. welche der beiden Lichtquellen rotes oder blaues Licht abstrahlt.

Alternativ oder zusätzlich zur Verwendung von Lichtquellen 31, 32 mit unterschiedlichen Wellenlängen l1, l2 bzw. Lichtfrequenzen kann das aus unterschiedlichen Richtungen eingestrahlte Licht auch mit der gleichen Wellenlänge abgestrahlt werden, in diesem Fall, sind die beiden Wellenlängen l1, l2 gleich. Um eine Unterscheidung zwischen den Reflexionsbildern der beiden Lichtquellen 31, 32 zu erreichen kann alternativ vorgesehen werden, dass die beiden Lichtquellen zu unterschiedlichen Zeitintervallen (INT1, INT2) aktiv geschaltet werden, sodass im Zuge der Verarbeitung der mittels der Sensoren aufgenommenen Intensitätswerte klargestellt ist, ob ein Reflexionsbild von mittels der ersten Lichtquelle 31 abgestrahlten Lichts oder ob ein Reflexionsbild von mittels der zweiten Lichtquelle 32 abgestrahlten Lichts vorliegt.

Die beiden Lichtquellen 31, 32 sind mittels einer Umschalteinheit angesteuert, die die beiden Lichtquellen 31, 32 zu den unterschiedlichen, voneinander getrennten, wiederkehrenden Zeitintervallen INT1, INT2 ansteuert. Während des ersten Zeitintervalls INT1 wird die erste Lichtquelle 31 aktiviert und die zweite Lichtquelle 32 deaktiviert. Es wird eine erste Lichtintensität $r_t$ detektiert, die dem vom jeweiligen Pixelsensor 21 erfassten Intensitätswert gleichgesetzt wird. Während des zweiten Zeitintervalls INT2 aktiviert die Umschalteinheit die zweite Lichtquelle 32 und deaktiviert die erste Lichtquelle 31. Es wird eine zweite Lichtintensität $b_t$ detektiert, die dem vom jeweiligen Pixelsensor 21 erfassten Intensitätswert gleichgesetzt wird.

Bei Beeinträchtigungen der Oberfläche, etwa durch Ausbrüche 11 oder Mikrorisse 13, der Schiene 1 kommt es zu einem geänderten Reflexionsverhalten der Oberfläche der Schiene 1 abhängig davon, aus welcher Richtung das Licht auf die Oberfläche der Schiene 1 einstrahlt. Typische Beeinträchtigungen der Schienenoberfläche sind Ausbrüche 11 und Brüche 12. Diese Beeinträchtigungen werden durch Analyse der Reflexionen des von den Lichtquellen 31, 32 abgegebenen Lichts abhängig von Position und Farbe erkennbar.

Die folgenden Berechnungen zur Erkennung von Ausbrüchen 11 werden für jeden einzelnen Pixelsensor 21 separat durchgeführt, wobei der jeweilige Pixelsensor 21 sowohl einen Intensitätswert $b_t$ für blaues Licht als auch ein Intensitätswert für rotes Licht $r_t$ ermittelt.

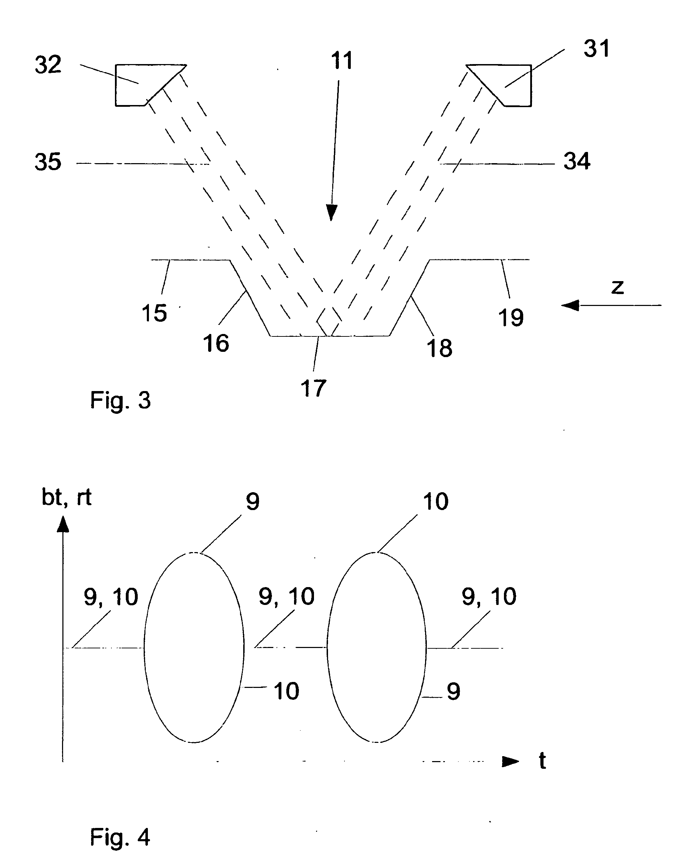

Fig. 3 zeigt einen Profilschnitt in Ausdehnungsrichtung z der Schiene 1 mit einem Ausbruch 11. Weiters sind die mittels der Lichtquellen 31, 32 abgegebenen Lichtstrahlenbündel 33 und 34 dargestellt. In der Darstellung der Fig. 3 trifft rotes Licht, das von der ersten Lichtquelle 31 abgegeben wurde, von rechts oben auf den Ausbruch 11 auf, während blaues Licht, das von der zweiten Lichtquelle 32 abgegeben wurde, von links oben auf den Ausbruch 11 auftrifft.

Die von einem der Pixelsensor 21 des Zeilensensors 2 während der Inspektionsfahrt aufgenommenen Intensitätswerte sind in Fig. 4 dargestellt. Es werden ein erster Kanal 9 für die roten Farbanteile und ein zweiter Kanal 10 für die blauen Farbanteile dargestellt. Die Kanäle 9, 10 umfassen jeweils die im Zuge der Inspektionsfahrt aufgenommenen Intensitätswerte für rotes und blaues Licht. Auf der Ordinate sind jeweils die Intensitätswerte $r_t$, $b_t$, auf der Abszisse ist die Aufnahmezeit t - bzw. damit korrelierend - die jeweilige Messposition aufgetragen.

Im folgenden wird davon ausgegangen, dass sich die Schiene 1 gegenüber der Messvorrichtung von rechts nach links bewegt bzw. dass sich die Messvorrichtung gegenüber der Schiene 1 von links nach rechts bewegt.

In den ungestörten Bereichen 15, 19 mit hinreichend guter Oberflächenqualität erhält man lediglich ein diffuse Reflexion nach dem Lambertschen Gesetz, was in einem mittelgroßen Lichtstrom in Richtung des Bildsensors 2 resultiert. Die jeweiligen Intensitätswerte $r_t$, $b_t$ weisen einen Wert auf, der in etwa dem Mittelwert aller Intensitätswerte $r_t$, $b_t$ entspricht.

Gelangt der linke Rand 16 des Ausbruchs 11 in den Aufnahmebereich des Zeilensensors 2, trifft rotes Licht von rechts oben, auf dem linken Rand 16 des Ausbruchs 11 auf, wodurch sich am linken Rand 16 des Ausbruchs 11 eine spiegelnde Reflexion in Richtung des Zeilensensors 2 ergibt. Hierdurch ergibt sich, wie in Fig. 4 dargestellt, ein relativ großer Lichtstrom in roter Farbe auf das jeweilige Pixel des Zeilensensors 2. Das von links kommende blaue Licht der zweiten Lichtquelle 32 wird hingegen durch die spezifische Form des Ausbruchs 11 abgeschwächt, sodass nicht einmal diffus reflektiertes Licht oder ein geringerer Teil des diffus reflektierten Lichts auf den jeweiligen Pixelsensor 21 des Zeilensensors 2 trifft. Im blauen Kanal 10 ergibt sich somit eine teilweise oder vollständige Abschattung, was in einem verringerten oder relativ kleineren Lichtstrom in Richtung Zeilensensor 2 bzw. des jeweiligen Pixelsensors 21 resultiert.

Im Innenbereich 17 des Ausbruchs 11 ergeben sich keine Unterschiede zu den ungestörten Bereichen 15, 19.

Gelangt der rechte Rand 18 des Ausbruchs 11 in den Aufnahmebereich des Zeilensensors 2 trifft blaues Licht auf dem rechten Rand 18 des Ausbruchs 11 auf, wodurch sich am rechten Rand 18 des Ausbruchs 11 eine spiegelnde Reflexion in Richtung des Zeilensensors 2 ergibt. Hierdurch ergibt sich, wie in Fig. 4 dargestellt, ein relativ großer Lichtstrom in blauer Farbe auf das jeweilige Pixel des Zeilensensors 2.

Das von rechts kommende rote Licht ersten Lichtquelle 31 wird hingegen durch die spezifische Form des Ausbruchs 11 abgeschwächt, sodass nicht einmal diffus reflektiertes Licht oder ein verringerter Anteil des diffus reflektierten Lichts auf den jeweiligen Pixelsensor 21 des Zeilensensors 2 trifft. Im roten Kanal 9 ergibt sich somit eine vollständige oder teilweise Abschattung, was in einem relativ kleineren oder verringerten Lichtstrom in Richtung Zeilensensor 2 resultiert.

Im folgenden wird ein einfacher Algorithmus dargestellt, mittels dessen rasch detektiert werden kann, ob sich eine Kante 16, 18 eines in Ausdehnungsrichtung z der Schiene 1 verlaufenden Ausbruchs 11 zu einem vorgegebenen Aufnahmezeitpunkt im Aufnahmebereich des Zeilensensors 2 befunden hat.

Die Ermittlung der durch die Reflexion an einer Kante 16, 18 bedingten relativen Intensitätsschwankung erfolgt durch Vergleich der von einem Sensorpixel ermittelten und einer aus einem Mittelwert $r_{t,M}$ $b_{t,M}$ geschätzten lokalen Hintergrundreflexion.

Dieser Mittelwert wird in diesem vorteilhaften Ausführungsbeispiel durch eine gleitende Mittelwertbildung ermittelt und für jeden Pixelsensor 21 des Zeilensensors 2 zu jedem Zeitpunkt laufend separat bestimmt. Als Mittelwertfilter kommt in dieser konkreten Ausführungsform der Erfindung ein Filter mit symmetrischen Gaußkern, beispielsweise der Größe 11x11, und beispielsweise mit dem Parameter Sigma=2 zum Einsatz. Zur Bildung des Mittelwerts werden somit die dem jeweiligen Messwert vorangehenden fünf Messwerte, der Messwert selbst sowie die auf diesen Wert folgenden fünf Messwerte herangezogen.

Alternativ kann jedoch auch jede andere Art der gleitenden Mittelwertbildung herangezogen werden. Für jeden Zeitpunkt t wird allgemein jeweils ein Mittelwert für den roten Kanal 9 und den blauen Kanal 10 ermittelt, der im folgenden mit $r_{t,M}$ bzw. mit $b_{t,M}$ bezeichnet wird.

Das Resultat des Mittelwertfilters kann in bekannter Weise effizient entweder im Ortsraum als gleitender Filter ausgeführt werden oder im Frequenzraum mittels der schnellen Fouriertransformation (FFT) bestimmt werden.

Im folgenden werden vier Kriterien T dargestellt, die Anzeichen für das Vorhandensein einer Kante 16, 18 sind.

$$T_{11} : r_{t+1} / r_{t,M} < 1/t_r$$

$$T_{21} : r_{t-1} / r_{t,M} > t_r$$

$$T_{31} : b_{t-1} / b_{t,M} < 1/t_b$$

$$T_{41} : b_{t+1} / b_{t,M} > t_b$$

Für den Zeitpunkt t=0 ergeben sich folgende Zusammenhänge:

$$T_{11} : r_1 / r_m < 1/t_r$$

$$T_{21} : r_{-1} / r_m > t_r$$

$$T_{31} : b_{-1} / b_m < 1/t_b$$

$$T_{41} : b_1 / b_m > t_b$$

Die genannten Kriterien sind allesamt erfüllt, wenn zu einem ersten Zeitpunkt t-1 eine linke Kante 16 vorliegt, sodass der ermittelte Intensitätswert $b_{t-1}$ für blaues Licht gegenüber dem Durchschnittswert $b_{t,M}$ verringert ist. Als Kriterium für die Verringerung kann $T_{31}$ verwendet werden, wobei das Verhältnis zwischen dem momentanen Intensitätswert und dem Mittelwert mit einem Schwellenwert $1/t_b$ verglichen wird. Entsprechend erhöht sich der ermittelte Intensitätswert des roten Lichts gegenüber dem Mittelwert des roten Lichts, sodass das Kriterium $T_{21}$ erfüllt ist.

Zu einem zweiten Zeitpunkt t+1, der zwei Aufnahmeintervalle nach dem ersten Zeitpunkt t-1 liegt, gerät die rechte Kante 18 in den Aufnahmebereich des Sensorpixels 21, wodurch in analoger Weise die die beiden Kriterien $T_{11}$ $T_{41}$ erfüllt sind.

Der Schwellenwert kann an die jeweiligen Messungen angepasst werden und liegt im vorliegenden Ausführungsbeispiel im Bereich zwischen 1,1 und 1,2. Die Beleuchtungsstärke, die Sensitivität des Pixelsensors 21 sowie die Oberflächenreflektivität der Schiene 1 können den Schwellenwert jedoch erheblich beeinflussen. Der Schwellenwert wird typischerweise im Zuge eines Optimierungsverfahrens bestimmt, bei dem anhand einer Anzahl von bekannten Fehlern nach einem Schwellenwert-Parameter $t_b$ gesucht wird, bei dem möglichst sämtliche Fehler detektiert werden aber möglichst wenig fehlerfreie Oberflächenbereiche als fehlerhaft erkannt werden.

Weisen die zu bestimmenden Ausbrüche eine größere Breite auf, werden die Aufnahmeintervalle kürzer gewählt oder fährt das Schienenfahrzeug langsamer über die Schienen, so liegen mehr als zwei Aufnahmeintervalle zwischen den beiden Kanten 16, 18. Um diesen Effekt zu kompensieren, kann in einer alternativen Ausführungsform vorgesehen werden, mehrere Aufnahmen abzuwarten. Entsprechend können zur Bestimmung der Kriterien T auch Zeitpunkte t+d, t-d, herangezogen werden die vom jeweiligen Aufnahmepunkt eine größere Entfernung aufweisen:

$$T_{1d} : r_{t+d} / r_{t,M} < 1/t_r$$

$$T_{2d} : r_{t-d} / r_{t,M} > t_r$$

$$T_{3d} : b_{t-d} / b_{t,M} < 1/t_b$$

$$T_{4d} : b_{t+d} / b_{t,M} > t_b$$

Für den Zeitpunkt t=0 ergeben sich folgende Zusammenhänge:

$$T_{1d} : r_d / r_m < 1/t_r$$

$$T_{2d} : r_{-d} / r_m > t_r$$

$$T_{3d} : b_{-d} / b_m < 1/t_b$$

$$T_{4d} : b_d / b_m > t_b$$

Der vorgegebene Wert d entspricht dabei einem Zeitversatz. Der vorgegebene Wert d ist durch die Anzahl durch Anpassung an die typischerweise auftretende Rissbreite festgelegt. Größere Rissbreiten führen zu einer Erhöhung des vorgegebenen Werts d, wobei der vorgegebene Wert (d) insbesondere auf 1 oder 2 festgelegt wird.

Die Feststellung des Vorliegens der Kante 16, 18 eines Ausbruches 11 wird durch Auswertung der vier Kriterien überprüft. Durch Prüfung jedes Kriteriums erhält man jeweils binäres Ergebnis. Eine Entscheidung darüber, ob ein Ausbruch 11 als detektiert angesehen wird, ist dann positiv, wenn eine Mindestanzahl R von Kriterien erfüllt ist, also z.B. $T_{11} + T_{21} + T_{31} + T_{41} >= R$, wobei R üblicherweise mit 4 bestimmt ist.

Das erfindungsgemäße Verfahren eignet sich neben der Erkennung von Kanten 16, 18 von Ausbrüchen auch zur Erkennung entsprechender Kanten 16, 18 von Headchecks 14 und Mikrorissen 13.

Zur Durchführung des erfindungsgemäßen Verfahrens wird vorteilhafterweise die erfindungsgemäße Vorrichtung verwendet. Ein bevorzugtes Ausführungsbeispiel dieser Vorrichtung wird im folgenden beschrieben. Die Vorrichtung umfasst, wie bereits beschrieben, eine Fortbewegungseinheit in Form eines nicht dargestellten Schienenfahrzeugs. Im einfachsten Fall kann die erfindungsgemäße Vorrichtung auf einem Schienenfahrzeug oder einem Anhänger bzw. Waggon befestigt werden. Wie bereits erwähnt, sind die beiden Lichtquellen 31, 32 und der Zeilensensor 2 gegeneinander feststehend auf der Fortbewegungseinheit angeordnet, es findet keine Relativbewegung oder Relativverschwenkung zwischen den beiden Lichtquellen 31, 32 und dem Zeilensensor 2 statt.

Alternativ können auch der Zeilensensor 2 und die beiden Lichtquellen 31, 32 feststehend angeordnet sind und die Schiene 1 oder der Gegenstand 1 relativ zum Zeilensensor 2 und die beiden Lichtquellen 31, 32 bewegt werden. Für die weitere Bestimmung von oberflächlichen Fehlern ergeben sich hierdurch keine Unterschiede.

Weiters umfasst die erfindungsgemäße Vorrichtung eine Aufnahmeeinheit, die an den Zeilensensor 2 angeschlossen ist und die vom Zeilensensor aufgenommenen Bilder entsprechend ihrer Aufnahmereihenfolge abspeichert. Jedem der einlangenden Bilder wird in der bevorzugten Ausführungsform der Erfindung jeweils ein Speicherplatz zugewiesen, wobei nacheinander einlangenden Bildern jeweils eine inkrementell erhöhte Speicheradresse zugewiesen wird. Gegebenenfalls können auch Komprimierungsverfahren zur Verringerung des Speicherplatzes eingesetzt werden. In der Aufnahmeeinheit kann auf die Intensitätswerte der einzelnen Zeilenbilder wahlfrei zugegriffen werden. Ferner kann auch auf die unterschiedlichen Intensitätswerte für die beiden Wellenlängen wahlfrei zugegriffen werden.

Der Aufnahmeeinheit ist eine Mittelwertbildungseinheit nachgeschaltet, die für sämtliche der Pixelsensoren 21 und für sämtliche Zeitpunkte t jeweils einen gleitenden Mittelwert $r_{t,M}$, $b_{t,M}$ für die mit dem Pixelsensor 21 aufgenommenen Lichtintensitätswerte $r_t$, $b_t$ für beide Lichtwellenlängen $l1$, $l2$ ermittelt. Der Mittelwertbildungseinheit ist eine Detektoreinheit nachgeschaltet, die für sämtliche Pixelsensoren 21 und Aufnahmezeitpunkte t jeweils die folgenden Kriterien $T_{11}$, $T_{21}$, $T_{31}$, $T_{41}$ überprüft:

$$T_{11} : r_{t+1} / r_{t,M} < 1/t_r$$

$$T_{21} : r_{t-1} / r_{t,M} > t_r$$

$$T_{31} : b_{t-1} / b_{t,M} < 1/t_b$$

$$T_{41} : b_{t+1} / b_{t,M} > t_b,$$

Der Detektoreinheit ist eine Ausbruchserkennungseinheit nachgeschaltet, die eine Kante 16, 18 eines Ausbruchs 11 dann als vorhanden detektiert, wenn zumindest eine bestimmte Anzahl R der Kriterien $T_{1d}$, $T_{2d}$, $T_{3d}$, $T_{4d}$ erfüllt ist. Im vorliegenden Beispiel wird die Anzahl mit R=4 festgesetzt. Es können jedoch auch geringere Werte R=3 oder R=3 verwendet werden.

Zur Erkennung von Brüchen 12 wird das in diesem Ausführungsbeispiel dargestellte Verfahren wie folgt ergänzt: Brüche verlaufen typischerweisen weitestgehend normal zur Längserstreckungsrichtung z der Schiene 1 und weisen eine sehr geringe Ausdehnung in Längserstreckungsrichtung z der Schiene 1 auf. Es wird eine Anzahl D von Aufnahmen festgelegt, die innerhalb eines Fahrtwegs aufgenommen werden, der der maximalen Ausdehnung eines Bruchs 12 in Längserstreckungsrichtung z der Schiene 1 entspricht. Es wird jeweils über diese Anzahl D von Aufnahmen innerhalb von zu einem Zeitpunkt t beginnenden Aufnahmeintervalls [t, t+D] die Anzahl derjenigen Pixelsensoren 21 gezählt, von denen ein Ausbruch 11 detektiert worden ist. In diesem vorteilhaften Ausführungsbeispiel der Erfindung sind sämtliche Pixelsensoren 21 des Zeilensensors 2 mit einer Brucherkennungseinheit verbunden. Zeigen mehr als ein vorgegebenr Schwellenwert der der Pixelsensoren 21, in diesem bevorzugten Ausführungsbeispiel handelt es sich um einen Schwellenwert von 80% der Pixelsensoren 21 des Zeilensensors 2, in deren Aufnahmebereich sich die Schiene 1 befindet, einen Ausbruch 11 an, so kann angenommen werden, dass durch den innerhalb des Aufnahmeintervalls [t, t+D] aufgenommenen Oberflächenbereichs ein Bruch 12 verläuft. Die Brucherkennungseinheit gibt ein diesbezügliches Signal ab.

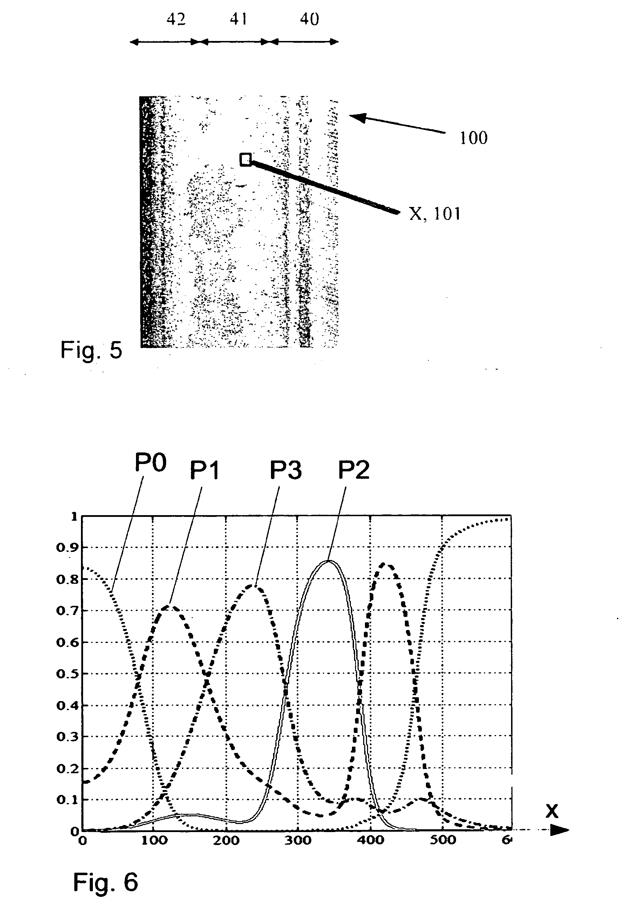

Im folgenden wird ein weiteres erfindungsgemäßes Verfahren beschrieben. Die im einzelnen beschriebenen Oberflächenstrukturen sind in Fig. 1 dargestellt. Fig. 5 zeigt ein Digitalbild 100 und die Anwendung dieses erfindungsgemäßen Verfahrens zur Bestimmung der Fehlerwahrscheinlichkeit.

Wie bereits erwähnt, wird ein Digitalbild 100 des Gegenstands 1 erstellt. Das Digitalbild 100 kann dabei mittels jedes beliebigen Bilderstellungsverfahrens, so etwa auch des bereits dargestellten Aufnahmeverfahrens mittels des Zeilensensors 2 aber auch mittels eines digitalen Flächensensors erstellt werden. Das Digitalbild 100 wird in weiterer Folge zur Erkennung, Lokalisierung und Klassifizierung von Fehlern des aufgenommenen Gegenstands 1 herangezogen. Es können hierbei unterschiedliche Fehlertypen C bzw. Fehlerklassen auftreten.

Neben jenen sich in einer Oberflächenstörung manifestierenden auf der Oberfläche des Schienenkopfes erkennbaren Strukturen bzw. Fehlertypen C gibt es auch ebene Strukturen wie Mikrorissregionen 13 und Schleifzonen 11'. Mikrorisse 13 sind potentielle Vorstufen für Ausbrüche und Schienenbrüche und sind durch eine charakteristische Textur gekennzeichnet. Schleifzonen 11' entstehen beim Schleifen von Schienen, eine Maßnahme um Schienenschädigung vorzubeugen. Schleifzonen 11' zeichnen sich ebenfalls durch eine charakteristische Textur, die jedoch jener von Mikrorissen 13 unterschiedlich ist, aus. Pixel 101, die durch diese Oberflächentexturen charakterisiert sind, werden mittels Texturanalyse und Klassifikation identifiziert:

Eine Gabor-Filterbank (Field, D.J.: Relations between the statistics of natural images and the response properties of cortical cells. J. Optical Soc. Am. A 12, 2379-2394 (1987) bzw. Jähne, B.: Digitale Bildverarbeitung, chap. 13.4.5: Quadraturfilter, pp. 383-384. Springer, 5th edn. (2002)) mit 3 Skalen und 6 Orientierungen wird dabei auf jeden Farbkanal des Digitalbilds angewandt. Jede Oberflächenklasse wird durch eine statistische Verteilungsfunktion beschrieben. Diese Verteilungsfunktionen sind Gaußsche Mischungsfunktionen (GMM) (Bishop, C.M.: Neural Networks for Pattern Recognition, chap. 2.6: Mixture models, pp. 59-73. Oxford University Press (1995)) die mit dem Expectation-Maximization- Algorithmus (EM) (Dempster, A., Laird, N., Rubin, D.: Maximum-likelihood from incomplete data via the EM algorithm. Journal of the Royal Statistical Society, Series B (Methodological) 39, 1-38 (1977)) bestimmt wurden. Eine Bayes-Entscheidungsregel (Bishop, C.M.: Pattern Recognition and Machine Learning, chap. 1.5: Decision theory, pp. 38-48. Springer (2006)) wird zur Klassifikation der Oberflächenklassen verwendet.

Alternativ können auch andere Bildklassifikationsalgorithmen verwendet werden, um die einzelnen Pixel 101 des Digitalbilds 100 unterschiedlichen Fehlerklassen zuzuordnen.

Schließlich wird mit sämtlichen Klassifikationsalgorithmen für jedes der Pixel X, 101 des Digitalbilds 100 jeweils eine Wahrscheinlichkeit P(C|X) ermittelt, dass der in dem Pixel X, 101 dargestellte Gegenstandsbereich des aufgenommenen Gegenstands 1 mit einem Fehler eines der vorgegebenen Fehlertypen C behaftet ist.

Es wird nun vorab eine a priori Wahrscheinlichkeit P(C), dass ein bestimmter Fehlertyp f in einem bestimmten Pixel X, 101 mit einer bestimmten Koordinatenposition x, z im Digitalbild 100 des zu prüfenden Gegenstands 1 auftritt, ermittelt.

Die a-priori Wahrscheinlichkeit P(C) wird als Wahrscheinlichkeit bzw. relative Häufigkeit des Auftretens von Fehlern in einer Anzahl von vorab aufgenommenen Digitalbildern 100 ermittelt, wobei die a-priori Wahrscheinlichkeit P(C) iterativ durch Mittelung der dem Klassifikationsverfahren entspringenden a-posteriori Wahrscheinlichkeitswerte P(C|X) errechnet wird.

Die einzelnen ermittelten a-posteriori Wahrscheinlichkeitswerte P(C|x) für das Vorliegen eines Fehlers des Fehlertyps C im jeweiligen Pixel 101, X wird mit der a-priori Wahrscheinlichkeit P(C) gewichtet werden, sodass die a-posteriori Wahrscheinlichkeit P(X|C), dass in einem Pixel X, 101 ein Fehler eines bestimmten Fehlertyps C in einem Pixel auftritt mit P(X|C) = P(C|X) * P(C) festgelegt wird. Dieses Vorgehen kann im Zuge eines Kalibrierungsverfahrens vorgenommen werden. Das Kalibrierungsverfahren kann iterativ in Zeitabständen erneut durchgeführt werden, um eine Anpassung an die jeweiligen aufgenommenen Gegenstände, hier Schienen 1, zu verbessern.

Im vorliegenden Ausführungsbeispiel wird weiters die Abhängigkeit der a-priori Wahrscheinlichkeit P(C) von der Lage des jeweiligen Pixels 101 in Ausdehnungsrichtung z vernachlässigt. Dieses Vorgehen erscheint insofern zielführend, als Schienen 1 typischerweise bestimmte Fehlertypen oder Fehlerklassen C oder Abnützungserscheinungen nur an bestimmten Stellen entlang eines Schnittes in quer zur Fahrtrichtung zeigen.

Fig. 6 zeigt a-priori Wahrscheinlichkeiten für die einzelnen Fehlerklassen C, abhängig von der Pixelposition x orthogonal zur Fahrtrichtung. Wie aus Fig. 6 ersichtlich, treten Ausbrüche 11, Brüche 12 und Mikrorisse 13 vorwiegend im Bereich des Schienenspiegels 41, also am höchsten Punkte der Schiene 1 auf. Die Wahrscheinlichkeit des Auftretens von Mikrorissen 13 ist in der a-priori-Wahrscheinlichkeitsfunktion $P_3$ dargestellt. Headchecks 14 treten vorwiegend an der Fahrkante 42 auf. Schleifzonen 11', die durch das Abschleifen der Schienen 1 zur Verbesserung der Haltbarkeit erstellt werden, werden im Zuge des Betriebs an denjenigen Stellen beseitigt, die von den Rädern des Zugs befahren werden und bleiben somit weitestgehend an denjenigen Stellen erhalten, die nicht von den Rädern des Zugs befahren werden, also den Außenkanten 40 der Schiene 1. Die Wahrscheinlichkeit des Auftretens von Schleifzonen 11' ist in der a-priori-Wahrscheinlichkeitsfunktion $P_2$ dargestellt.

Die Wahrscheinlichkeit, dass ein detektierter Fehler durch Hintergrundveränderungen fälschlich detektiert worden ist, ist in der a-priori-Wahrscheinlichkeitsfunktiion P0 dargestellt.


**Patentansprüche**

1. Verfahren zum Auffinden von Oberflächenfehlem, wie etwa Kanten (16, 18) von Ausbrüchen (11), Brüchen (12), Mikrorissen (13) oder Schleifzonen (11'), auf der Oberfläche von länglichen Gegenständen (1), wie etwa Schienen oder Metallprofilen, wobei dem zu inspizierenden Gegenstand (1) eine Längserstreckungsrichtung (z) zugeordnet ist,

   a) mit einem Zeilensensor (2), dessen Aufnahmebereich (20) in einer vorgegebenen Ebene (xy) liegt, die normal zur Längserstreckungsrichtung (z) des Gegenstands (1) ausgerichtet ist, wobei sich der jeweilige zu inspizierende Gegenstand (1) im Aufnahmebereich (20) des Zeilensensors (2) befindet, sowie
   b) mit zumindest zwei gegenüber dem Zeilensensor (2) lagefest angeordneten Lichtquellen (31, 32), wobei die erste Lichtquelle (31) in Längserstreckungsrichtung (z) vor dem Zeilensensor (1) angeordnet ist und die zweite Lichtquelle (32) hinter dem Zeilensensor (1) angeordnet ist und das jeweilige Licht beider Lichtquellen (31, 32) in dem Bereich des Gegenstands (1) einstrahlt, der im Aufnahmebereich des Zeilensensors (2) liegt,
   c) wobei der Zeilensensor (2) jeweils eine Anzahl von Pixelsensoren (21) zur separaten Erkennung des Lichts einer der beiden Lichtquellen (31, 32) aufweist, wobei jeder der Pixelsensoren (21) separat die Lichtintensität ($r_t$, $b_t$) des von jeder der beiden Lichtquellen (31, 32) abgegebenen und auf ihn reflektierten Lichts misst,
   d) wobei jeder Pixelsensor (21) jeweils eine erste Lichtintensität ($r_t$) ermittelt, die dem von der ersten Lichtquelle (31) abgegebenen und auf ihn reflektierten Lichtes entspricht, und eine zweite Lichtintensität ($b_t$) ermittelt, die dem von der zweiten Lichtquelle (32) abgegebenen und auf ihn reflektierten Lichtes entspricht
   e) wobei der Zeilensensor (2) und die Lichtquellen (31, 32) zueinander lagefest sind und in Längserstreckungsrichtung (z) des zu inspizierenden Gegenstands (1) eine Relativbewegung zum Gegenstand (1) vollführen,
   f) wobei mit dem Zeilensensor (2) eine Anzahl von Zeilenbildem ermittelt wird, und entsprechend ihrer Aufnahmereihenfolge abgespeichert werden,
   **dadurch gekennzeichnet, dass**
   für zumindest einen Pixelsensor (21) und zumindest einen Zeitpunkt (t)
   g) jeweils ein erster Mittelwert ($r_{t,M}$) und ein zweiter Mittelwert ($b_{t,M}$) für die erste Lichtintensität ($r_t$) und die zweite Lichtintensität ($b_t$) ermittelt wird,
   h) dass für einen einem vorgegebenen einem Zeitversatz entsprechenden Wert (d) die folgenden Kriterien ($T_{1d}$, $T_{2d}$, $T_{3d}$, $T_{4d}$) überprüft werden
   $T_{1d} : r_{t+d}/ r_{t.M} <1/t_r$
   $T_{2d} : r_{t-d} / r_{t,M} > t_r$
   $T_{3d} : b_{t-d} / b_{t,M} < 1/t_b$
   $T_{4d} : b_{t+d} / b_{t.M} > t_b$,
   wobei $t_r$ und $t_b$ zwei vorgegebene Schwellenwerte sind, und
   i) eine Kante (16, 18) eines Ausbruchs (11) oder ein Fehler der Oberfläche dann als vorhanden detektiert wird, wenn zumindest eine bestimmte Anzahl der Kriterien ($T_{1d}$, $T_{2d}$, $T_{3d}$, $T_{4d}$) erfüllt ist.

2. Verfahren nach Anspruch 1, **dadurch gekennzeichnet, dass** jeder der Pixelsensoren (21) jeweils einen ersten und einen zweiten Teilsensor umfasst, wobei der erste Teilsensor Licht der ersten Wellenlänge (I1) misst und der zweite Teilsensor Licht der zweiten Wellenlänge misst, und/oder dass die beiden Lichtquellen (31, 32) Licht unterschiedlicher Wellenlängen (I1, I2) abgeben und jeder der Pixelsensoren (21) separat die Lichtintensität bei jeder der beiden Wellenlängen (I1, I2) bestimmt, dass eine der beiden Lichtwellenlängen (I1, I2) im Bereich des roten Lichts und die jeweils andere Lichtwellenlänge im Bereich des blauen Lichts gewählt wird.

3. Verfahren nach einem der Ansprüche 1 oder 2, **dadurch gekennzeichnet, dass** die beiden Lichtquellen (31, 32) zu unterschiedlichen, voneinander getrennten, wiederkehrenden Zeitintervallen (INT1, INT2) Licht abgeben, wobei während des ersten Zeitintervalls (INT1) die erste Lichtquelle (31) aktiviert wird und die erste Lichtintensität ($r_t$) dem vom jeweiligen Pixelsensor (21) erfassten Intensitätswert gleichgesetzt wird und während des zweiten Zeitintervalls (INT2) die zweite Lichtintensität ($b_t$) dem vom jeweiligen Pixelsensor (21) erfassten Intensitätswert gleichgesetzt wird.

4. Verfahren nach einem der Ansprüche 1 oder 2, **dadurch gekennzeichnet, dass** die Relativposition und die Relativausrichtung des Zeilensensors (2) und der Lichtquellen (31, 32) zueinander anhand eines als fehlerfrei detektierten Referenzgegenstands (10) derart ausgerichtet werden, dass das mit dem Zeilensensor (2) aufgenommene Bild frei von unmittelbaren Reflexionen des von den Lichtquellen (31, 32) ausgesandten Lichts (34, 35) ist.

5. Verfahren nach einem der vorangehenden Ansprüche, **dadurch gekennzeichnet, dass** eine Kante (16, 18) oder ein Fehler der Oberfläche nur dann als vorhanden detektiert wird, wenn alle vier Kriterien ($T_{1d}$, $T_{2d}$, $T_{3d}$, $T_{4d}$) erfüllt sind, und/oder dass der erste Mittelwert und/oder der zweite Mittelwert durch Bildung eines gleitenden Mittelwerts ermittelt wird, insbesondere mittels eines Gauss-Filters, der vorzugsweise eine Anzahl von vorangehenden und nachfolgenden Intensitätswerten gewichtet summiert, und/oder dass der vorgegebene Wert (d) durch die Anzahl durch Anpassung an die typischerweise auftretende Rissbreite festgelegt wird, wobei größere Rissbreiten zu einer Erhöhung des vorgegebenen Werts (d) führen, wobei der vorgegebene Wert (d) insbesondere auf 1 oder 2 festgelegt wird.

6. Verfahren nach einem der vorangehenden Ansprüche, **dadurch gekennzeichnet, dass** die beiden Schwellenwerte ($t_r$, $t_b$) durch Kalibrierung bzw. Optimierung ermittelt werden, wobei gegebenenfalls in einem Kalibrierungsschritt eine Anzahl von Zellenbildern mit bekannten Fehlern inspiziert werden und die Anzahl der als fehlerhaft bezeichneten unversehrten Stellen sowie die Anzahl der nicht detektierten Fehler minimiert wird, und wobei insbesondere die Schwellenwerte ($t_r$, $t_b$) jeweils auf einen Wert zwischen 1,1 und 1,3 festgelegt werden, und/oder dass ein Bruch dann als detektiert angesehen wird, wenn innerhalb eines vorgegebenen Aufnahmezeitraums [t, t+D], vorzugsweise von zwischen 10 und 50 Zeilenbildern, in zumindest 60%, insbesondere in zumindest 80%, der Pixelsensoren (21) jeweils zumindest eine Kante (16, 18) detektiert worden ist.

7. Vorrichtung zum Auffinden von Kanten (16, 18) von Ausbrüchen auf der Oberfläche von länglichen Gegenständen (1), wobei dem zu inspizierenden Gegenstand (1) eine Längserstreckungsrichtung (z) zugeordnet ist,

   a) umfassend einen Zellensensor (2), dessen Aufnahmebereich (20) in einer vorgegebenen Ebene (xy) liegt, die normal zur Längserstreckungsrichtung (z) des Gegenstands (1) ausgerichtet ist und wobei sich der jeweilige zu inspizierende Gegenstand (1) im Aufnahmebereich (20) des Zeilensensors (2) befindet, sowie
   b) zumindest zwei gegenüber dem Zeilensensor (2) lagefest angeordnete Lichtquellen (31, 32), nämlich eine erste Lichtquelle (31) und eine zweite Lichtquelle (32), wobei die erste Lichtquelle (31) in Längserstreckungsrichtung (z) vor dem Zeilensensor (1) angeordnet ist und die zweite Lichtquelle (32) hinter dem Zeilensensor (1) angeordnet ist und das jeweilige Licht beider Lichtquellen (31, 32) in dem Bereich des Gegenstands (1). einstrahlt, der im Aufnahmebereich des Zeilensensors (2) liegt,
   c) wobei der Zeilensensor (2) jeweils eine Anzahl von Pixelsensoren (21) zur separaten Erkennung des von den beiden Lichtquellen (31, 32) abgegebenen Lichts sowie zur Bestimmung der jeweiligen Lichtintensität ($r_t$, $b_t$) aufweist, und
   d) umfassend eine Fortbewegungseinheit zur Relativbewegung des Zeilensensors (2) und der Lichtquellen (31, 32) in Längserstreckungsrichtung (z) relativ zu dem zu inspizierenden Gegenstand (1) sowie
   e) eine Aufnahmeeinheit, die an den Zeilensensor (2) angeschlossen ist und die vom Zeilensensor aufgenommenen Bilder entsprechend ihrer Aufnahmereihenfolge abspeichert,
   **dadurch gekennzeichnet, dass**
   f) eine Mittelwertbildungseinheit vorgesehen ist, die für zumindest einen Pixelsensor (21) und zumindest einen Zeitpunkt (t) jeweils einen Mittelwert ($r_{t,M}$, $b_{t,M}$) für die aufgenommenen Lichtintensitätswerte ($r_t$, $b_t$) ermittelt,
   g) dass für den Pixelsensor (21) eine Detektoreinheit vorgesehen ist, die für die aufgenommenen Lichtintensi-tätswerte ($r_t$, $b_t$) zu zumindest einem Zeitpunkt (t) jeweils für einen einem vorgegebenen einem Zeitversatz entsprechenden Wert (d) die folgenden Kriterien ($T_{1d}$, $T_{2d}$, $T_{3d}$, $T_{4d}$) überprüft
   $T_{1d} : r_{t+d}/r_{t,M} < 1/t_r$ $T_{2d} : r_{t-d}/r_{t,M} > t_r$ $T_{3d} : b_{t-d}/b_{t.M} < 1/t_b$ $T_{4d} : b_{t+d}/b_{t,M} > t_b$,
   wobei $t_r$ und $t_b$ zwei vorgegebene Schwellenwerte sind, und
   h) dass eine der Detektoreinheit nachgeschaltete Kantenerkennungseinheit vorgesehen ist, die eine Kante (16, 18) eines Ausbruchs dann als vorhanden detektiert, wenn zumindest eine bestimmte Anzahl der Kriterien ($T_{1d}$, $T_{2d}$, $T_{3d}$, $T_{4d}$) erfüllt ist.

8. Vorrichtung nach Anspruch 7, **dadurch gekennzeichnet, dass** die beiden Lichtquellen (31, 32) Licht unterschiedlicher Wellenlängen (I1, I2) abgeben, und jeder der Pixelsensoren (21) separat die Lichtintensität bei jeder der beiden Wellenlängen (I1, I2) bestimmt, wobei gegebenenfalls eine der beiden Lichtwellenlängen (I1, I2) im Bereich des roten Lichts und die jeweils andere Lichtwellenlänge im Bereich des blauen Lichts gewählt wird, und/oder dass jeder der Pixelsensoren (21) jeweils einen ersten und einen zweiten Teilsensor umfasst, wobei der erste Teilsensor Licht der ersten Wellenlänge (11) misst und der zweite Teilsensor Licht der zweiten Wellenlänge misst.

**9.** Vorrichtung nach einem der Ansprüche 7 oder 8, **dadurch gekennzeichnet, dass** eine Umschalteinheit vorgesehen ist, die die beiden Lichtquellen (31, 32) ansteuert, sodass die beiden Lichtquellen (31, 32) zu unterschiedlichen, voneinander getrennten, wiederkehrenden Zeitintervallen (INT1, INT2) Licht abgeben,

wobei die Umschalteinheit während des ersten Zeitintervalls (INT1) die erste Lichtquelle (31) aktiviert, wobei die zweite Lichtquelle (32) deaktiviert und die erste Lichtintensität ($r_t$) dem vom jeweiligen Pixelsensor (21) erfassten Intensitätswert gleichgesetzt wird und

wobei die Umschalteinheit während des zweiten Zeitintervalls (INT2) die zweite Lichtquelle (32) aktiviert, wobei die erste Lichtquelle (31) deaktiviert und die zweite Lichtintensität ($b_t$) dem vom jeweiligen Pixelsensor (21) erfassten Intensitätswert gleichgesetzt wird.

**10.** Vorrichtung nach einem der Ansprüche 7 bis 9, **dadurch gekennzeichnet, dass** die Relativposition und die Relativausrichtung des Zeilensensors (2) und der Lichtquellen (31, 32) anhand eines als fehlerfrei detektierten Referenzgegenstands (10) derart ausgerichtet sind, dass das mit dem Zeilensensor (2) aufgenommene Bild frei von unmittelbaren Reflexionen des von der Lichtquelle (31, 32) ausgesandten Lichts (31) ist.

**11.** Vorrichtung nach einem der Ansprüche 7 bis 10, **dadurch gekennzeichnet, dass** die Detektoreinheit eine Kante (16, 18) dann als vorhanden detektiert, wenn alle vier Kriterien ($T_{1d}$, $T_{2d}$, $T_{3d}$, $T_{4d}$) erfüllt sind, und/oder dass die Mittelwertbildungseinheit den ersten Mittelwert und/oder den zweiten Mittelwert durch Bildung eines gleitenden Mittelwerts aus den jeweiligen Lichtintensitätswerten ($r_t$, $b_t$) ermittelt, insbesondere mittels eines Gauss-Filters, der vorzugsweise eine Anzahl von vorangehenden und nachfolgenden Lichtintensitätswerten ($r_t$, $b_t$) gewichtet summiert, und/oder dass der vorgegebene Wert (d) durch Anpassung an die typischerweise auftretende Rissbreite festgelegt ist, wobei größere Rissbreiten zu einer Erhöhung des vorgegebenen Werts (d) führen, und wobei der vorgegebene Wert (d) insbesondere auf 1 oder 2 festgelegt wird, und/oder dass die beiden Schwellenwerte ($t_r$, $t_b$) jeweils auf einen Wert zwischen 1,1 und 1,3 festgelegt sind.

**12.** Vorrichtung nach einem der Ansprüche 7 bis 10, **gekennzeichnet durch** eine Brucherkennungseinheit, die den einzelnen Detektoreinheiten nachgeschaltet ist, und die einen Bruch dann feststellt, wenn innerhalb eines vorgegebenen Aufnahmezeitraums [t, t+D], vorzugsweise von zwischen 10 und 50 Zeilenbildem, in zumindest 60%, insbesondere in zumindest 80%, der Pixelsensoren (21) jeweils zumindest eine Kante (16, 18) detektieren.

**13.** Vorrichtung nach einem der Ansprüche 7 bis 12, **dadurch gekennzeichnet, dass** die Fortbewegungseinheit durch ein Schienenfahrzeug gebildet ist, das den Zeilensensor (2) und die beiden Lichtquellen (31, 32) trägt und gegebenenfalls auf dem Gegenstand (1), insbesondere der Schiene (1), relativ bewegbar oder verfahrbar ist, und/oder dass der Zeilensensor (2) und die beiden Lichtquellen (31, 32) feststehend angeordnet sind die Fortbewegungseinheit zur Fortbewegung des Gegenstands (1) relativ zum Zeilensensor (2) und den beiden Lichtquellen (31, 32) ausgebildet ist.

**14.** Datenträger, **dadurch gekennzeichnet, dass** auf ihm ein Programm zur Durchführung eines Verfahrens nach einem der vorangehenden Patentansprüche 1 bis 6 abgespeichert ist.

**Claims**

**1.** A method for the location of surface defects, such as edges (16, 17) of nicks (11), fractures (12), microcracks (13) or grinding zones (11') at the surface of oblong objects (1), such as rails or metal profiles, wherein a longitudinal extension direction (z) is assigned to the object (1) to be inspected,

a) with a line sensor (2), the capturing area (20) of which lies in a given plane (xy) oriented at right angles to the longitudinal extension direction (z) of the object (1), wherein the respective object (1) to be inspected is located within the capturing area (20) of the line sensor (2), and

b) with at least two light sources (31, 32) stationarily positioned relative to the line sensor (2), wherein the first light source (31) is, in the longitudinal extension direction (z), arranged in front of the line sensor (2) and the second light source (32) is arranged behind the line sensor (2), and the respective light of both light sources (31, 32) radiates into the area of the object (1) positioned within the capturing area of the line sensor (2),

c) wherein the line sensor (2) has a number of pixel sensors (21) for separately detecting the light of the two light sources (31, 32), wherein each of the pixel sensors (21) separately measures the light intensity ($r_t$, $b_t$) of the light emitted by the two light sources (31, 32) and reflected onto it,

d) wherein each of the pixel sensors (21) determines a first light intensity ($r_t$) corresponding to the light emitted by the first light source (31) and reflected onto it, and a second light intensity ($b_t$) corresponding to the light emitted by the second light source (32) and reflected onto it,

e) wherein the line sensor (2) and the light sources (31, 32) are stationarily positioned with respect to each other and perform a motion relative to the object (1) in the longitudinal extension direction (z) of the object (1) to be inspected,

f) wherein the line sensor (2) determines a number of line images and saves them according to their capturing sequence,

**characterized in that**

for at least one pixel sensor (21) and for at least one point in time (t)

g) a first mean value ($r_{t,M}$) and a second mean value ($b_{t,M}$) for the first light intensity ($r_t$) and the second light intensity ($b_t$), respectively, are determined,

h) that for a value (d) corresponding to a given time lag, the following criteria ($T_{1d}$, $T_{2d}$, $T_{3d}$, $T_{4d}$) are checked:

$T_{1d}$: $r_{t+d}/rt_{,M}<1/t_r$
$T_{2d}$: $rt-d/r_{t,M}>t_r$
$T_{3d}$: $b_{t-d}/b_{L,M}<1/t_b$
$T_{4d}$: $b_{t+d}/b_{L,M}>t_b$,
wherein $t_r$ and $t_b$ are two given threshold values, and

i) an edge (16, 18) of a nick (11) or a defect of the surface is detected as being present when at least a certain number of the criteria ($T_{1d}$, $T_{2d}$, $T_{3d}$, $T_{4d}$) is satisfied.

**2.** The method according to claim 1 **characterized in that** each of the pixel sensors (21) comprises a first and a second partial sensor, wherein the first partial sensor measures light of a first wavelength (I1) and the second partial sensor measures light of a second wavelength, and/or that the two light sources (31, 32) emit light of different wavelengths (I1, I2) and each of the pixel sensors (21) separately determines the light intensities at each of the two wavelengths (11, 12), wherein one of the two light wavelengths (11, 12) is selected to be within the range of red light and the respectively other light wavelength is selected to be within the range of blue light.

**3.** A method according to any one of the claims 1 or 2 **characterized in that** the two light sources (31, 32) emit light at different recurring time intervals (INT1, INT2), separated from each other, wherein during the time interval (INT1) the first light source (31) is activated and the first light intensity ($r_t$) is equated with the intensity value acquired by the respective pixel sensor (21), and during the second time interval (INT2) the second light intensity ($b_t$) is equated with the intensity value acquired by the respective pixel sensor (21).

**4.** A method according to any one of the claims 1 or 2 **characterized in that** the relative position and the relative orientation of the line sensor (2) and the light sources (31, 32) with respect to each other are aligned by means of a reference object (10) detected to be free from defects so that the image taken with the line sensor (2) is free of direct reflections of the light (34, 35) emitted by the light sources (31, 32).

**5.** A method according to any one of the preceding claims **characterized in that** an edge (16, 18) or a defect of the surface is only detected as being present when all four criteria ($T_{1d}$, $T_{2d}$, $T_{3a}$, $T_{4d}$) are satisfied, and/or that the first mean value and/or the second mean value are determined by creating a moving mean value, in particular by means of a Gaussian filter that preferably weightedly sums up a number of preceding and subsequent intensity values, and/or that the given value (d) is determined by the number through adaptation to the typically occurring crack widths, wherein larger crack widths lead to an increase of the given value (d), with the given value (d) in particular being set at 1 or 2.

**6.** A method according to any one of the preceding claims **characterized in that** the two threshold values ($t_r$, $t_b$) are determined by calibration or optimization, wherein optionally a number of line images with known defects is inspected in a calibration step and the number of intact locations determined to be defective as well as the number of non-detected defects are minimized, and wherein each the threshold values ($t_r$, $t_b$) is in particular set at a value between 1,1 and 1,3, and/or that a fracture is regarded as detected when within a given capturing period [t, t+D], preferably between 10 and 50 line images, at least one edge (16, 18) has been detected in at least 60 %, in particular at least 80 %, of the pixel sensors (21).

**7.** A device for locating edges (16, 18) of nicks at the surface of oblong objects (1), wherein a longitudinal extension direction (z) is assigned to the object (1) to be inspected,

a) comprising a line sensor (2), the capturing area (20) of which lies in a given plane (xy) oriented at right angles to the longitudinal extension direction (z) of the object (1), wherein the respective object (1) to be inspected is located within the capturing area (20) of the line sensor (2), and

b) at least two light sources (31, 32) stationarily positioned with respect to the line sensor (2), namely a first light source (31) and a second light source (32), wherein the first light source (31) is, in the longitudinal extension direction (z), arranged in front of the line sensor (2) and the second light source (32) is arranged behind the line sensor (2), and the respective light of both light sources (31, 32) radiates into the area of the object (1) positioned within the capturing area of the line sensor (2),

c) wherein the line sensor (2) has a number of pixel sensors (21) for separately detecting the light of the two light sources (31, 32) and determining the respective light intensities ($r_t$, $b_t$), and

d) comprising a movement unit for a relative movement of the line sensor (2) and the light sources (31, 32) in the longitudinal extension direction (z) relative to the object (1) to be inspected as well as

e) a capturing unit that is connected to the line sensor (2) and saves the images captured by the line sensor according to their capturing sequence, **characterized in that**

f) a mean value determination unit is provided that determines for at least one pixel sensor (21) and for at least one point in time (t) respective mean values ($r_{t,M}$, $b_{t,M}$) for the recorded light intensity values ($r_t$, $b_t$),

h) that a detector unit is provided for the pixel sensor (21) that checks the following criteria ($T_{1d}$, $T_{2d}$, $T_{3d}$, $T_{4d}$) for the recorded light intensity values ($r_t$, $b_t$) at at least one point in time (t) for a value (d) corresponding to a given time lag,:

$$T_{1d}: r_{t+d}/rt_{,M}<1/t_r, \quad T_{2d}: r_{t-d}/r_{t,M}>t_r, \quad T_{3d}: b_{t-d}/b_{L,M}<1/t_b, \quad T_{4d}: b_{t+d}/b_{L,M}>t_b,$$

wherein $t_r$ and $t_b$ are two given threshold values, and

i) that an edge detection unit downstream of the detector unit is provided that detects an edge (16, 18) of a nick as being present when at least a certain number of the criteria ($T_{1d}$, $T_{2d}$, $T_{3d}$, $T_{4d}$) is satisfied.

8. The device according to claim 7 **characterized in that** the two light sources (31, 32) emit light of different wavelengths (11, 12) and each of the pixel sensors (21) separately determines the light intensities at each of the two wavelengths (11, 12), wherein one of the two light wavelengths (11, 12) may be selected to be within the range of red light and the respectively other light wavelength may be selected to be within the range of blue light, and/or that each of the pixel sensors (21) comprises a first and a second partial sensor, wherein the first partial sensor measures light of a first wavelength (11) and the second partial sensor measures light of a second wavelength.

9. A device according to any one of the claims 7 or 8 **characterized in that** a switching unit is provided that drives the two light sources (31, 32) so that the two light sources (31, 32) emit light at different, independent, recurring time intervals (INT1, INT2),

wherein during the first time interval (INT1) the first light source (31) is activated, with the second light source (32) being deactivated, and the first light intensity ($r_t$) is equated with the intensity value acquired by the respective pixel sensor(21),

wherein the switching unit activates the second light source (32) during the second time interval (INT2), with the first light source (31) being deactivated, and the second light intensity ($b_t$) is equated with the intensity value acquired by the respective pixel sensor (21).

10. A device according to any one of the claims 7 to 9 **characterized in that** the relative position and the relative orientation of the line sensor (2) and the light sources (31, 32) with respect to each other are aligned by means of a reference object (10) detected to be free from defects so that the image taken with the line sensor (2) is free of direct reflections of the light (34, 35) emitted by the light sources (31, 32).

11. A device according to any one of the claims 7 to 10 **characterized in that** the detector unit detects an edge (16, 18) as being present when all four criteria ($T_{1d}$, $T_{2d}$, $T_{3d}$, $T_{4d}$) are satisfied, and/or that the mean value determination unit determines the first mean value and/or the second mean value by creating a moving mean value from the respective light intensity values ($r_t$, $b_t$), in particular by means of a Gaussian filter that preferably weightedly sums up a number of preceding and subsequent intensity values ($r_t$, $b_t$), and/or that the given value (d) is determined through adaptation to the typically occurring crack width, wherein larger crack widths lead to an increase of the given value (d), with the given value (d) in particular being set at 1 or 2, and/or that each of the two threshold values ($t_r$, $t_b$) is set at a value between 1,1 and 1,3.

12. A device according to any one of the claims 7 to 10 **characterized by** a fracture detection unit downstream of the individual detector units that detects a fracture when within a given capturing period [t, t+D], preferably between 10 and 50 line images, at least 60 %, in particular at least 80 %, of the pixel sensors (21) detect at least one edge (16, 18).

**13.** A device according to any one of the claims 7 to 12 **characterized in that** the movement unit is a rail vehicle that carries the line sensor (2) and the two light sources (31, 32) and is optionally relatively movable or traversable on the object (1), in particular the rail (1) and/or
that the line sensor (2) and the two light sources (31, 32) are stationarily positioned and the movement unit is provided for moving the object (1) relative to the line sensor (2) and the two light sources (31, 32).

**14.** A data carrier **characterized in that** a program for carrying out a method according to any one of the preceding claims 1 to 6 is saved thereon.

**Revendications**

**1.** Procédé pour localiser des défauts de surface, comme des bords (16, 18) d'encoches (11), de brèches (12), de microfissures (13) ou de zones (11') de meulage, sur la surface d'objets (1) élongés, comme des rails ou profils de métal, l'objet (1) à examiner étant attribué à une direction (z) d'extension longitudinale,

a) comprenant un capteur (2) à lignes, dont la région (20) d'enregistrement est disposée dans un plan (xy) prédéfini, normal à la direction (z) d'extension longitudinale de l'objet (1), l'objet (1) à examiner respectif étant compris dans la région (20) d'enregistrement du capteur (2) à lignes, ainsi que
b) comprenant au moins deux sources (31, 32) de lumière, disposées de manière fixe relative du capteur (2) à lignes, la première source (31) de lumière étant disposée devant le capteur (1) à lignes dans la direction (z) d'extension longitudinale et la deuxième source (32) de lumière étant disposée derrière le capteur (1) à lignes et la lumière respective des deux sources (31, 32) de lumière illuminant la région de l'objet (1) disposée dans la région d'enregistrement du capteur (2) à lignes,
c) le capteur (2) à lignes présentant respectivement un nombre de capteurs (21) à pixel pour reconnaître séparément la lumière d'une des deux sources (31, 32) de lumière, chacun des capteurs (21) à pixel mesurant séparément l'intensité ($r_t$, $b_1$) de la lumière émise par chacune des deux sources (31, 32) de lumière et reflétée sur celui-ci,
d) chaque capteur (21) à pixel détectant au moins une première intensité ($r_t$) de lumière correspondant à la lumière émise par la première source (31) de lumière et reflétée sur celui-ci, et détectant au moins une deuxième intensité ($b_t$) de lumière correspondant à la lumière émise par la deuxième source (32) de lumière et reflétée sur celui-ci,
e) le capteur (2) à lignes et les sources (31, 32) de lumière étant disposés de manière fixe l'un par rapport aux autres et effectuant un mouvement relatif à l'objet (1) dans la direction (z) d'extension longitudinale de l'objet (1),
f) le capteur (2) à lignes servant à détecter un nombre d'images à lignes et à mémoriser celles-ci selon l'ordre de leur enregistrement,
**caractérisé en ce que**
pour au moins un capteur (2) de pixel et au moins un moment (t)
g) respectivement une première moyenne ($r_{1,M}$) et une deuxième moyenne ($b_{t,M}$) sont détectées pour la première intensité ($r_t$) de lumière et la deuxième intensité ($b_t$) de lumière,
h) pour une valeur (d) correspondant à un délai temporel déterminé les critères suivants ($T_{1d}$, $T_{2d}$, $T_{3d}$, $T_{4d}$) sont vérifiés :

$$T_{1d}: r_{t+d}/r_{t,M} < 1/t_r$$
$$T_{2d}: r_{t-d}/r_{t,M} > t_r$$
$$T_{3d}: b_{t-d}/b_{L,M} < 1/t_b$$
$$T_{4d}: b_{t+d}/b_{L,M} > t_b,$$

$t_r$ et $t_b$ étant deux valeurs de seuils déterminés, et
i) un bord (16, 18) d'une encoche (11) ou un défaut de surface est détecté comme étant présent lorsque au moins un nombre précis de critères ($T_{1d}$, $T_{2d}$, $T_{3d}$, $T_{4d}$) sont réunis.

**2.** Procédé selon la revendication 1, **caractérisé en ce que** chacun des capteurs (21) à pixel comporte au moins un premier et un deuxième capteur partiel, le premier capteur partiel mesurant la lumière de la première longueur (l1) d'ondes et le deuxième capteur partiel mesurant la lumière de la deuxième longueur d'ondes et/ou en ce que les deux sources (31, 32) de lumière émettent chacune une lumière de longueurs (I1, I2) d'ondes différentes et chacun des capteurs (21) à pixel détermine séparément l'intensité de chaque des deux longueurs (I1, I2) d'ondes, et **en ce que** une des deux longueurs (I1, I2) d'ondes est choisie dans la gamme de la lumière rouge et l'autre longueur d'onde de lumière est choisie dans la gamme de la lumière bleue.

3. Procédé selon une des revendications 1 ou 2, **caractérisé en ce que** les deux sources (31, 32) de lumière émettent la lumière dans des intervalles (INT1, INT2) de temps différentes, séparées et répétées, la première source (31) de lumière étant activée pendant la première intervalle (INT1) de temps et la première intensité ($r_t$) de lumière étant assimilée à la valeur d'intensité détectée par le capteur (21) à pixel respectif et la deuxième intensité ($b_t$) de lumière étant assimilée à la valeur d'intensité détectée par le capteur (21) à pixel respectif pendant la deuxième intervalle (INT2) de temps.

4. Procédé selon une des revendications 1 ou 2, caractérisé en ce la position relative et la disposition relative du capteur (2) à lignes et des sources (31, 32) de lumière l'un par rapport aux autres sont disposées l'une par rapport à l'autre en fonction d'un objet (10) de référence détecté comme étant sans erreur d'une manière à ce que l'image enregistrée par le capteur (2) à lignes soit prive de reflets directs de la lumière (34, 35) émise par les sources (31, 32) de lumière.

5. Procédé selon une des revendications précédentes, **caractérisé en ce que** un bord (16, 18) ou un défaut de surface est détecté comme étant présent uniquement lorsque tous les quatre critères ($T_{1d}$, $T_{2d}$, $T_{3d}$, $T_{4d}$) sont réunis et/ou la première moyenne et/ou la deuxième moyenne est/sont déterminée(s) par l'élaboration d'une moyenne pondérée, notamment à travers un filtre de Gauss faisant de préférence la somme d'une sélection de valeurs d'intensité précédents et suivants de façon pondérée, et/ou **en ce que** la valeur (d) prédéfinie est déterminée par le nombre par adaptation à la largeur de fissure typique, des largeurs de fissure majeures ayant pour conséquence une augmentation de la valeur (d) prédéfinie, la valeur (d) prédéfinie (d) étant établies notamment à 1 ou 2.

6. Procédé selon une des revendications précédentes, **caractérisé en ce que** les deux valeurs ($t_r$, $t_b$) de seuil étant déterminées par calibration et/ou optimisation, un nombre d'images à lignes avec des défauts connus étant éventuellement examiné et le nombre des endroits étant considéré comme étant sans défauts ainsi que le nombre des défauts non détectés sont minimisés, les valeurs ($t_r$, $t_b$) de seuil étant déterminées notamment à une valeur entre 1,1 et 1,3, et/ou **en ce que** une encoche est considérée comme détectée lorsque dans un laps de temps [$t_1$, t+D] d'enregistrement prédéfini, de préférence entre 10 et 50 images à lignes, au moins un bord (16, 18) aura été détecté dans au moins 60 %, notamment dans au moins 80 % des capteurs (21) à pixel.

7. Dispositif pour trouver des bords (16, 18) de brèches dans la surface d'objets (1) élongés, l'objet (1) à examiner étant attribué à une direction (z) d'extension longitudinale,

   a) comprenant un capteur (2) à lignes, dont la région (20) d'enregistrement est disposée dans un plan (xy) prédéfini, normal à la direction (z) d'extension longitudinale de l'objet (1), l'objet (1) à examiner respectif étant compris dans la région (20) d'enregistrement du capteur (2) à lignes, ainsi que
   b) comprenant au moins deux sources (31, 32) de lumière disposées de manière fixe relative du capteur (2) à lignes, dont une première (31) et une deuxième (32) source de lumière, la première source (31) de lumière étant disposée devant le capteur (1) à lignes dans la direction (z) d'extension longitudinale et la deuxième source (32) de lumière étant disposée derrière le capteur (1) à lignes et la lumière respective des deux sources (31, 32) de lumière illuminant la région de l'objet (1) disposée dans la région d'enregistrement du capteur (2) à lignes,
   c) le capteur (2) à lignes présentant respectivement un nombre de capteurs (2) à pixel pour reconnaître séparément la lumière émise par les deux sources (31, 32) de lumière et pour déterminer l'intensité ($r_t$, $b_t$) de la lumière respective,
   d) comprenant une unité de mouvement pour le mouvement rotatoire du capteur (2) à lignes et des sources (31, 32) de lumière dans la direction (z) d'extension longitudinale relativement à l'objet à examiner ainsi que
   e) une unité d'enregistrement reliée au capteur (2) à lignes et mémorisant les images captées par le capteur à lignes selon leur ordre d'enregistrement,
   **caractérisé en ce que**
   f) une unité d'élaboration d'une moyenne est prévue, déterminant pour au moins un capteur (21) à pixel et au moins un moment (t) respectivement une moyenne ($r_{t,M1}$, $b_{t,M}$) pour les valeurs ($r_{t1}$, $b_t$) d'intensité de lumière enregistrées,
   g) une unité de détection étant prévue pour le capteur (21) à pixel, vérifiant dans au moins un moment (t) pour

les valeurs ($r_{t1}$, $b_t$) d'intensité de lumière enregistrées respectivement pour une valeur (d) correspondant à un délai temporel déterminé les critères suivants ($T_{1d}$, $T_{2d}$, $T_{3d}$, $T_{4d}$) :

$T_{1d}$: $r_{t+d}/rt_{,M}<1/t_r$
$T_{2d}$: $r_{t-d}/r_{t,M}>t_r$
$T_{3d}$: $b_{t-d}/b_{L,M}<1/t_b$
$T_{4d}$: $b_{t+d}/b_{L,M}>t_b$,

$t_r$ et $t_b$ étant deux valeurs de seuils déterminés, et

h) une unité de reconnaissance de bords connectée en aval par rapport à l'unité de détection est prévue, détectant un bord (16, 18) d'une encoche comme présent lorsque au moins un nombre précis de critères ($T_{1d}$, $T_{2d}$, $T_{3d}$, $T_{4d}$) sont réunis.

8. Dispositif selon la revendication 7, **caractérisé en ce que**
les deux sources (31, 32) de lumière émettent chacune une lumière de longueurs (I1, I2) d'ondes différentes et chacun des capteurs (21) à pixel détermine séparément l'intensité de chaque des deux longueurs (I1, I2) d'ondes, une des deux longueurs (I1, I2) d'ondes étant éventuellement choisie dans la gamme de la lumière rouge et l'autre longueur d'onde de lumière étant choisie dans la gamme de la lumière bleue et/ou **en ce que** chacun des capteurs (21) à pixel comporte au moins un premier et un deuxième capteur partiel, le premier capteur partiel mesurant la lumière de la première longueur (I1) d'ondes et le deuxième capteur partiel mesurant la lumière de la deuxième longueur d'ondes.

9. Dispositif selon une des revendications 7 ou 8, **caractérisé en ce que** une unité de commutation est prévue, commandant les deux sources (31, 32) de lumière d'une manière à ce que les deux sources (31, 32) de lumière émettent la lumière dans des intervalles (INT1, INT2) de temps différentes, séparées et répétées,
l'unité de commutation activant la première source (31) de lumière pendant la première intervalle (INT1) de temps, la deuxième source (32) de lumière étant désactivé et la première intensité ($r_t$) de lumière étant assimilée à la valeur d'intensité détectée par le capteur (21) à pixel et
l'unité de commutation activant la seconde source (32) de lumière pendant la seconde intervalle (INT2) de temps, la première source (31) de lumière étant désactivé et la deuxième intensité ($b_t$) de lumière étant assimilée à la valeur d'intensité détectée par le capteur (21) à pixel.

10. Dispositif selon une des revendications 7 à 9, **caractérisé en ce que** la position relative et la disposition relative du capteur (2) à lignes et des sources (31, 32) de lumière sont disposées en fonction d'un objet (10) de référence détecté comme étant sans erreur d'une manière à ce que l'image enregistrée par le capteur (2) à lignes soit prive de reflets directs de la lumière (1) émise par les sources (31, 32) de lumière.

11. Dispositif selon une des revendications 7 à 10, **caractérisé en ce que** l'unité de détection détecte un bord (16, 18) comme étant présent lorsque tous les quatre critères ($T_{1d}$, $T_{2d}$, $T_{3d}$, $T_{4d}$) sont réunis et/ou l'unité d'élaboration d'une moyenne détermine la première moyenne et/ou la deuxième moyenne par l'élaboration d'une moyenne pondérée des valeurs ($r_t$, $b_t$) d'intensité de lumière respectives, notamment à travers un filtre de Gauss faisant de préférence la somme d'une sélection de valeurs ($r_t$, $b_t$) d'intensité précédents et suivants de façon pondérée, et/ou **en ce que** la valeur (d) prédéfinie est déterminée par adaptation à la largeur de fissure typique, des largeurs de fissure majeures ayant pour conséquence une augmentation de la valeur (d) prédéfinie établie notamment à 1 ou 2, et/ou **en ce que** les deux valeurs ($t_r$, $t_b$) de seuil sont établies à 1,1 et 1,3.

12. Dispositif selon une des revendications 7 à 10, **caractérisé en ce que** une unité de détection d'encoche connectée en aval par rapport à l'unité de détection détecte une encoche lorsque dans un laps de temps [t, t+D] d'enregistrement prédéfini, de préférence entre 10 et 50 images à lignes, au moins un bord (16, 18) aura été détecté dans au moins 60 %, notamment dans au moins 80 % des capteurs (21) à pixel.

13. Dispositif selon une des revendications 7 à 12, **caractérisé en ce que** l'unité de mouvement est formée par un véhicule ferroviaire supportant le capteur (2) à lignes et les deux sources (31, 32) de lumière et éventuellement pouvant être déplacé ou décalé relativement sur l'objet (1), notamment le rail (1), et/ou
**en ce que** le capteur (2) à lignes et les deux sources (31, 32) de lumière sont disposées de manière fixe et l'unité de mouvement pour déplacer l'objet (1) est disposée relativement au capteur (2) et aux deux sources (31, 32) de lumière.

14. Support de données, **caractérisé en ce que** un logiciel pour exécuter un procédé selon une des revendications 1 à 6 précédentes est mémorisé sur celui-ci.

Fig. 1

Fig. 2

Fig. 3

Fig. 4

Fig. 5

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006004846 A2

**In der Beschreibung aufgeführte Nicht-Patentliteratur**

- **ZACHER, M. ; BAUMANN, G. ; LE, R.** Modelle zur Prognose von Rollkontaktermüdungsschäden an Schienen. *EI - Der Eisenbahningenieur,* 2009, vol. 60 (7), 44-52
- **HOßFELD, M. ; CHU, W. ; ADAMECK, M. ; EICH, M.** Fast 3D-vision system to classify metallic coins by their embossed topography. *Electronic Letters on Computer Vision and Image Analysis,* 2006, vol. 5 (4), 47-63
- **FIELD, D.J.** Relations between the statistics of natural images and the response properties of cortical cells. *J. Optical Soc. Am. A,* 1987, vol. 12, 2379-2394
- Digitale Bildverarbeitung. **JÄHNE, B.** Quadraturfilter. Springer, 2002, 383-384
- Neural Networks for Pattern Recognition. **BISHOP, C.M.** Mixture models. Oxford University Press, 1995, 59-73
- **DEMPSTER, A. ; LAIRD, N. ; RUBIN, D.** Maximum-likelihood from incomplete data via the EM algorithm. *Journal of the Royal Statistical Society, Series B (Methodological,* 1977, vol. 39, 1-38
- Pattern Recognition and Machine Learning. **BISHOP, C.M.** Decision theory. Springer, 2006, 38-48